(19) Europäisches Patentamt
European Patent Office
Office européen des brevets

(11) **EP 0 949 947 B1**

(12) **EUROPEAN PATENT SPECIFICATION**

(45) Date of publication and mention
of the grant of the patent:
**27.03.2002 Bulletin 2002/13**

(21) Application number: **97950851.2**

(22) Date of filing: **09.12.1997**

(51) Int Cl.[7]: **B01D 24/26**

(86) International application number:
**PCT/US97/22327**

(87) International publication number:
**WO 98/25681 (18.06.1998 Gazette 1998/24)**

(54) **HIGH RATE FILTRATION SYSTEM**

HOCHLEISTUNGSFILTRATIONSSYSTEM

SYSTEME DE FILTRATION A DEBIT ELEVE

(84) Designated Contracting States:
**AT BE CH DE DK ES FI FR GB GR IE IT LI LU MC NL PT SE**

(30) Priority: **10.12.1996 US 32643 P**
**01.12.1997 US 980537**

(43) Date of publication of application:
**20.10.1999 Bulletin 1999/42**

(73) Proprietor: **Schreiber Corporation**
**Trussville, AL 35173 (US)**

(72) Inventor: **DEW, William, Frederick, Jr.**
**Homewood, AL 35209 (US)**

(74) Representative: **Naumann, Ulrich, Dr.-Ing. et al**
**Patentanwälte,**
**Ullrich & Naumann,**
**Luisenstrasse 14**
**69115 Heidelberg (DE)**

(56) References cited:
**DE-C- 312 993           US-A- 5 248 415**

• **PATENT ABSTRACTS OF JAPAN vol. 8, no. 122, 8 June 1984 & JP 59 036513 A (KINDAI KK), 28 February 1984,**
• **DATABASE WPI Week 9331 Derwent Publications Ltd., London, GB; AN 93248 XP002061964 & SU 1 754 159 A (KARPEKIN S A) , 15 August 1992**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Field of the Invention

This invention relates to filtration systems, including filtration systems used in connection with tertiary treatment of wastewater for reduction of suspended solids.

Background of the Invention

Disposal and reuse of wastewater from raw municipal sewage is problematic. Stringent wastewater treatment requirements have been promulgated to protect human health, particularly in those areas having limited water supply or dense populations. For example, Title 22 of the California Administrative Code establishes stringent water reuse criteria where human contact is likely to occur with treated wastewater.

Typically, wastewater is disinfected by chlorination or ultraviolet irradiation where the treated wastewater is discharged to inland surface waters. Disinfection of this type typically achieves complete destruction of pathogenic bacteria and substantial deactivation of viruses, but does not provide complete virus destruction. Viruses have been detected in secondary effluents.

Title 22 of the California Administrative Code is directed to tertiary treatment requirements. Viral monitoring is not specified in Title 22 because viruses typically occur in low concentrations in treated wastewater. Viral monitoring is expensive. Viral assays require special expertise. Laboratory procedures usually are off line and time consuming. Analytical costs are high. Therefore, instead of imposing measurements of viral concentrations, Title 22 sets forth a tertiary treatment system that consists of chemical coagulation, sedimentation, filtration, and disinfection where the public may be exposed to the treated wastewater, as in a recreational impoundment.

Under the provisions of Title 22, turbidity of the treated effluent normally cannot exceed an average operating value of 2 NTU after final filtration, and cannot exceed 5 turbidity units more than 5 percent of the time during any 24 hour period. Chlorination after this level of treatment typically insures effective virus destruction sufficient for the protection of public health. Direct filtration with chemical addition is allowed as an alternative to the complete treatment systems specified in Title 22 where it has been demonstrated that the results of the two treatment systems are comparable and meet the appropriate criteria.

It has been determined that disinfection rates typically correlate well with wastewater particle size distributions and that the ability to inactivate an individual wastewater particle is a function of the size of the particle. Direct tertiary filtration alone usually does not enhance the rate of disinfection unless the particle size distribution of the settled wastewater is modified. Tertiary filtration systems that operate to remove larger size particles should safely reduce the long contact times and high chlorine dosages typically employed in wastewater reclamation processes. Accordingly, granular filtration media is almost universally required as a part of wastewater reclamation. Granular filtration is somewhat time consuming and can be the limiting factor for a wastewater treatment system.

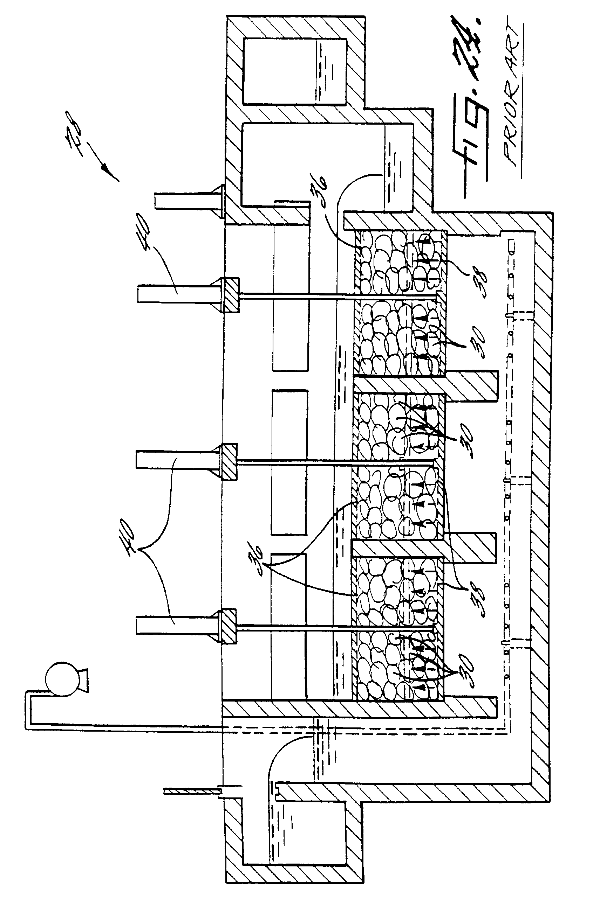

Masuda et al. U.S. Patent No. 5,248,415 discloses an upward flow filtration apparatus that is said to be useful as a tertiary filter for wastewater treatment systems and to operate at a relatively high flow rate. An embodiment of the subject matter described in the Masuda patent is represented in Figure 24 generally at **28** and is labelled Prior Art.

The filtration media described in the Masuda patent comprise a plurality of crimpy fibrous lumps. The fibrous lumps are disposed in the upward flow filtration apparatus **28** between first and second perforated panels **36** and **38**, respectively. The wastewater flows in an upward direction through the fibrous lumps and suspended matter is captured by the individual fibrous lumps.

The first perforated panel **36** is immovably mounted within the apparatus and the second perforated panel **38** is movably mounted within the apparatus and spaced below the first perforated panel. The lower movable perforated panel **38**, or bottom plate, is raised to compress the fibrous lumps to eliminate air gaps and to form a dense filter layer. The wastewater passes upwardly through the movable bottom plate and the filter layer and exits the top immovable plate **36**. Fine solid materials in the upward flow are said to progressively adhere to the filter layer from the lower portion to the upper portion thereof in that order. With progressive filtration, resistance to filtration is increased. The movable bottom plate is lowered from time to time and is said to define a cleaning chamber when the filtration performance is reduced and it becomes necessary to clean the fibrous lumps.

However, the apparatus described in the Masuda et al. patent with the movable bottom plate has some difficulties associated with it. A ram or screw **40** for moving the bottom plate passes through the wastewater, the media, and the top stationary plate **36**. The screw decreases the amount of room available for the media and potentially causes some channeling through the media in the region of the screw. The media are constructed of a loose fiber and can become entangled in the screw as it turns. A seal is used where the screw passes through the top plate, further complicating the operation of the device.

When the bottom plate is moved to compress the media, the lower layers of media become compressed. The compressed filter media in the lower portion of the bed is then the first portion of the media to contact the wastewater since the filter is operated in an upflow mode. The filter clogs up fast because large particles and fines are both trapped by the compressed initial layers of the filter media. The entire unit is shut down, usually before the upper filter layers are fully loaded, and the filter media is washed before the next cycle is begun.

The filter media is washed by moving the bottom plate downwardly away from the media to define a cleaning chamber. However, the flow rate of the wash water makes it difficult to achieve separation between the media and to obtain efficient cleaning. The Masuda device has typically required washing of the filter media on a frequent basis at a full flow rate of wash water equivalent to the flow rate of wastewater. Thus the overall efficiency of the apparatus described in the Masuda patent is greatly reduced.

It would be desirable to develop a filtration system suitable for tertiary wastewater treatment that substantially reduced or eliminated at least some of the problems associated with the Masuda device and yet provided a high rate filtration system as a suitable alternative to granular filtration media.

Summary of the Invention

The invention provides a high rate filtration system in which the collector size and effective pore size of the filtration media can be adjusted according to influent conditions and to promote efficient cleaning of the media. The fluid travels through successive layers of filter media in which each layer becomes progressively more compressed with a smaller effective pore size and collector size for filtration and removes smaller and smaller particles. The compression gradient promotes more uniform loading of the media throughout the filter bed. The compression gradient can be altered during filtration to adjust head loss across the media and to extend the time for filtration while maintaining filtration efficiency within acceptable limits.

When used for sewage treatment, effluent turbidity values of 2 NTU or lower can be achieved without chemical addition for influent turbidity values of up to approximately 8 NTU when the flow is from about 820 to 1230 $L/m^2 \cdot min$ (20 to 30 $gal/ft^2 \cdot min$) at a bed compression ratio of from about 15 to 40 percent. The percentage of backwash water required at filtration rates of 820 and 1230 $L/m^2 \cdot min$ (20 to 30 $gal/ft^2 \cdot min$) and at bed compression values of from 20 and 30 percent is from about 1 to 3 percent.

Depending on the influent quality and the desired effluent quality, the filtration system of the invention should be operable at increased flow rates above 1230 $L/m^2 \cdot min$ (30 $gal/ft^2 \cdot min$) so long as the head loss across the filter does not result in uneconomical operation. Flow rates of 1640 $L/m^2 \cdot min$ (40 $gal/ft^2 \cdot min$) to 2050 $L/m^2 \cdot min$ (50 $gal/ft^2 \cdot min$) or more should be useful, depending on the results desired.

The filtration apparatus of the invention is suitable for a wide variety of fluid/solid separations, including reducing suspended solids in municipal and industrial wastewater, recovery of machine shop working fluids, and a host of other separations. Compressible fibrous lump filter media as described in Mausda et al. U.S. Patent No. 5,248,415 are contained between upper and lower perforated panels in which, for operation in the upflow mode, the upper panel, or top plate, is movable to adjust the porosity and collector size of the media. A gradient of porosity is established across the filter bed in which the porosity is increased from top to bottom, which is opposite the direction of fluid flow.

The fluid to be filtered enters filter media at the less compressed bottom in the upflow mode. Larger particles are trapped in the lower portion of the bed where the fluid enters. Smaller particles travel through to successive layers of filter media. The final upper layer of filtration media removes the smallest particles for which filtration is provided. The compressed layer of filter media at the top clogs less frequently than when the bottom layer of filter media is compressed because the top layer filters only the fines and not the large size particles in addition.

The high rate filtration system of the invention typically is offstream less frequently and requires less washing of the media than prior apparatus. Filtration efficiency is comparable to that of other filters, but at filtration flow rates that typically are many times faster.

There is no necessity to provide a seal in an upper movable plate for a ram or screw that is designed to move the lower movable plate. Channelling can be reduced and the filter bed is not interrupted. There is no mechanical means in which the media can become entangled.

Several cells can be built into each of the filters that can be independently controlled so that one filter cell can be shut down and cleaned while another is operating. The wash cycle can be done at a relatively low flow rate with less water to be recycled, which means that the process can be run efficiently.

The foregoing and other objects, advantages and features of the invention, and the manner in which the same are accomplished, will be more readily apparent upon consideration of the following detailed description of the invention taken in conjunction with the accompanying drawings, which illustrate preferred and exemplary embodiments, and wherein:

Brief Description of the Drawings

Figure 1 is a schematic drawing of a representative activated sludge plant that includes the tertiary treatment system in accordance with the invention;

Figure 2 is a partially cutaway perspective view of a filtration apparatus in accordance with the invention;

Figures 3A through 3C are longitudinal schematics in cross section representing the filtration apparatus of Figure 2 in three different modes of operation: Figure 3A represents an upflow filtration mode, Figure 3B represents an upflow washing mode for cleaning the filter media, and Figure 3C represents an upflow flushing mode for removing remaining loose material from the filter bed prior to initiating a filtration mode;

Figure 4 is a representation of prior art filtration media for use in a filtration apparatus in accordance with the invention as described herein;

Figures 5A through 5D are plots of effluent turbidity against influent turbidity for an apparatus of the invention operated at four different flow rates and four different degrees of compression of the filter bed;

Figure 6 is a plot of headloss against filtration flow rate for an apparatus of the invention, starting with a clean filter bed, operated at four different degrees of compression of the filter bed;

Figure 7 is a plot of effluent turbidity against influent turbidity for an apparatus of the invention operated at 30% compression and at two different flow rates compared to several examples taken from the prior art operated at lower flow rates;

Figures 8A through 23C are plots of time against three different parameters for evaluating the performance of a filtration apparatus in accordance with the invention at four different influent flowrates and at four different percents compression of a filter bed at fixed initial depth for each flowrate: Figures A are plots of time against influent and effluent turbidity, Figures B are plots of time against efficiency of removal of suspended solids, and Figures C are plots of time against headloss across the filter media; and

Figure 24 is a representation of the prior art high speed filtration system described in Masuda et al. U.S. Patent No. 5,248,415.

Detailed Description of the Invention

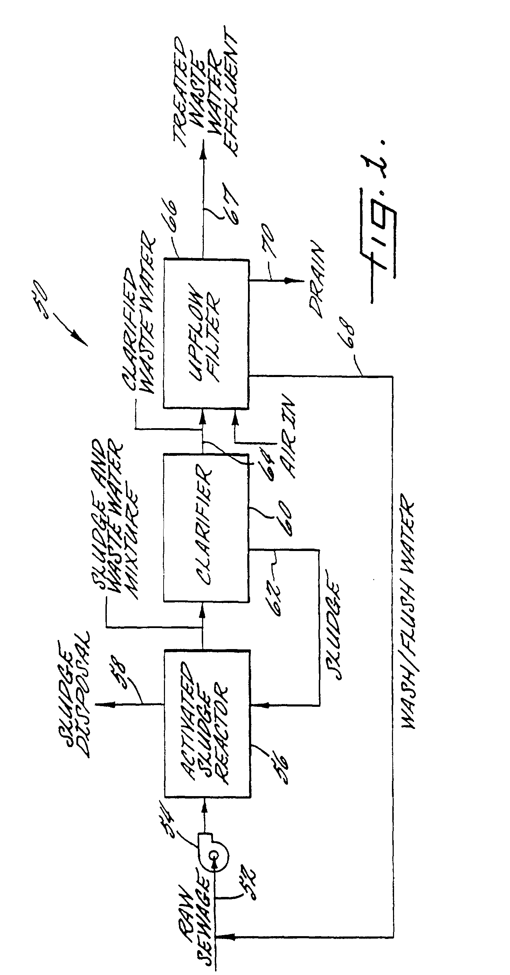

Represented in Figure 1 generally at 50 in highly schematic form is a representative activated sludge plant incorporating the filtration apparatus of the invention for tertiary treatment of raw municipal sewage for increased removal of suspended solids. It should be recognized that the configuration of the activated sludge plant as represented is but one example of an activated sludge plant and that numerous alternatives are available. It should also be recognized that, while the invention is described in the context of a tertiary treatment system for municipal sewage that is treated by an activated sludge process, the invention described herein is not so limited.

The invention is not limited to particular configurations or modes of operation of activated sludge plants, or to use in connection with an activated sludge plant. For example, the filtration apparatus of the invention can be used to treat wastewater that is not subjected to sludge digestion. Where it is desired to use the wastewater for its nutrient content, as in fertilizer, then the wastewater may be subjected to primary clarification prior to filtering in an apparatus of the invention and in the absence of sludge digestion. The wastewater may be screened and subjected to a swirl separator to remove large non-suspended solids, including cups, rags, boards, and other trash, prior to filtering in an apparatus of the invention.

The invention is not limited to the treatment of sewage or other municipal or industrial wastewater. On the contrary, the invention described herein should normally be useful in connection with a wide variety of filtration processes in which solids of appropriate particle size for the effective pore size of the media are removed from fluids that are compatible with the media, including both liquids and gases. For example, the filtration apparatus of the invention should be useful as a prefilter for removing small solid particles from seawater that otherwise could foul a reverse osmosis membrane in processes for producing fresh water from salt water. Machine shop working fluid, hydraulic fluids, and various petroleum or food oils should be usefully treated by the filtration apparatus of the invention to economically and efficiently remove small particles therefrom.

Accordingly, while the invention will be described in detail in the context of reducing suspended solids in wastewater in connection with the activated sludge process, it should be understood that the detailed description is for purposes of illustration and not of limitation.

Returning to Figure 1 and the activated sludge plant represented at **50**, wastewater, including, for example, raw municipal sewage, is collected and pumped through a conduit **52** by a pump **54** to enter an activated sludge reactor **56** for digestion by the biological sludge contained within the reactor of carbonaceous organic compounds, nitrates, and phosphates in a manner believed to be well known to the skilled artisan. Spent or excess sludge is withdrawn through a conduit **58** for disposal. The activated sludge reactor can be a single tank reactor wherein oxic, anoxic, and anaerobic phases of the reaction can occur sequentially in the single tank. These reactions can also take place in separate tanks. Sludge digestion is sometimes referred to as primary treatment of the wastewater.

The mixture of activated sludge and treated wastewater is then typically sent to one or more clarifiers **60** for gravity separation of the sludge from the treated wastewater, which is sometimes referred to as secondary treatment. The separated sludge is usually recycled from the clarifier to the activated sludge reactor through a conduit **62.** The clarified effluent **64** becomes the influent wastewater for a tertiary treatment system if tertiary treatment is used for further reduction of suspended solids.

The high rate upflow filtration system of the invention, represented at **66,** is useful as a tertiary filtration system and receives as influent the secondary effluent **64** from a clarifier **60** for further reduction in suspended solids. The filtered effluent **67** from the high rate filtration system **66** can be further treated with chlorine or ultraviolet light, as necessary, and disposed of to a creek or water reservoir.

The filter **66** is washed from time to time with its own influent received through conduit **64,** as described below, to clean the filter and remove the suspended solids trapped by the filter. Normally, the wash water will then be recycled through a conduit **68** to the influent **52** to the activated sludge reactor and mixed therewith. A drain **70** is also provided on the filter, which usually drains to a sewer, if it becomes necessary to drain the filter off stream from the return conduit **68.**

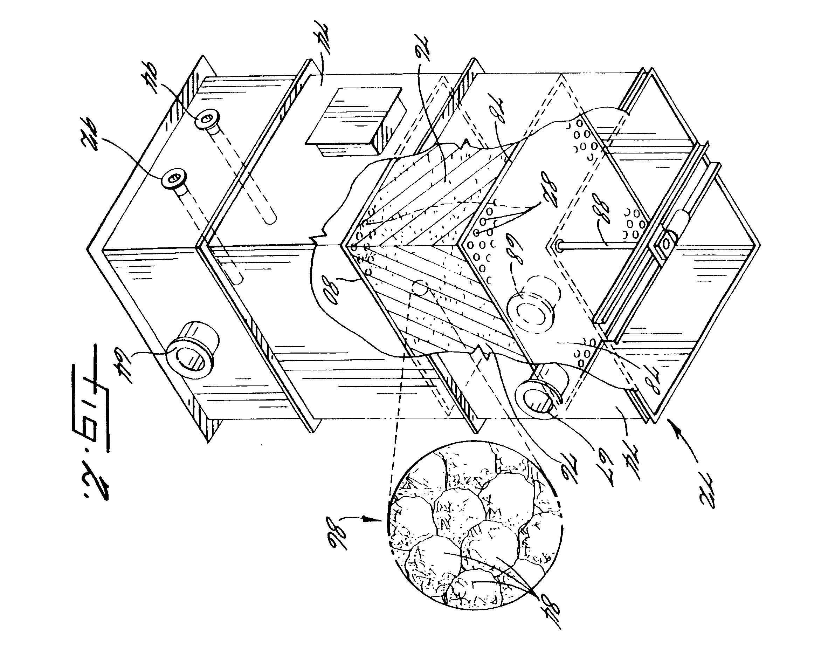

A filtration system of the invention is represented in a cutaway perspective view generally at **72** in Figure 2. The filtration system includes a housing **74** and a filtration bed **76** contained within the housing between two perforated plates, a movable upper plate **78** and a fixed lower plate **80.** The perforated plates contain a plurality of apertures **82** through which wastewater can enter and exit the filter bed. The apertures are sized to permit the wastewater freely to enter and exit the filter bed while substantially precluding the individual filter media components 84 from being displaced outside the filter bed. The individual filter media components **84** are illustrated in an enlarged perspective view generally at **86.**

The upper plate **78** is a vertically movable plate and its movement up and down is actuated by a piston **88** disposed above the plate. The plate is moved as necessary to control the degree of compression of the filter media in the bed. As should be recognized by the skilled artisan, the mechanism for moving the upper plate up and down can be designed to avoid extending substantially above the top most portion of the filter housing, which can reduce the free vertical space needed to accommodate the filter.

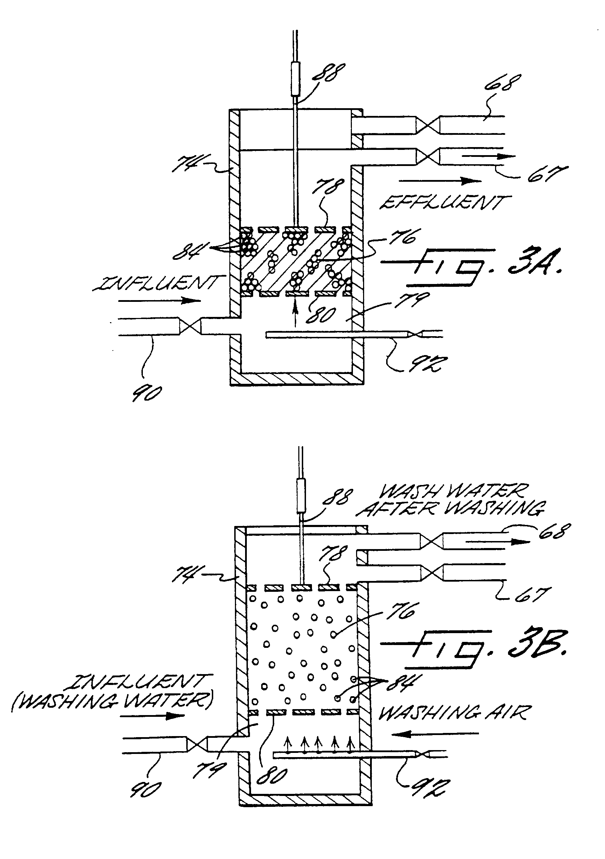

The operation of the filter in various modes is represented in Figures 3A through 3C in a longitudinal schematic cross section through the filter housing **74.** In the filtration mode, Figure 3A, the filter bed **76** is compressed by the top movable plate **78.** Influent wastewater enters a distribution plenum **79** at the bottom most portion of the filter housing through a conduit **90.** The wastewater, distributed evenly over the filter bed by the plenum, travels upwardly through the housing and enters the filter bed **76** through the apertures in the lower plate **80.** The effluent filtered wastewater exits the filter bed through the apertures in the upper plate and is conveyed out of the filter housing through conduit **67.** Suspended solids are trapped by the media.

It should be recognized that channeling of wastewater around the media in the region of the wall of the housing, if it occurs, can be alleviated by providing a flow distribution device adjacent the apparatus wall to direct the flow of wastewater away from the wall and into the filter bed. For example, a short baffle can be attached to the wall of the housing at regular intervals to extend into the filter bed by about two inches and at an angle of about 45 degrees upward to direct the flow of wastewater off the wall and into the filter bed.

When it is time to clean the filter media, the effluent conduit **67** is closed and conduit **68** is opened (Figure 3B) to recycle the wastewater effluent from the filtration system to the activated sludge reactor **56** or other primary treatment location. The upper movable plate **78** is moved vertically upward to mechanically expand the filter bed to an uncompressed condition. Air or other gas is injected below the filter bed through conduits **92** and **94** (Figure 2) to aid in expanding the bed and mechanically shearing the trapped solids from the filter media. Typically, air is injected on first one side and then the other side of the filter bed to increase the mechanical effect by alternating air injection between conduits **92** and **94.**

After the filter media is sufficiently cleaned, the filter bed is flushed for a suitable period of time to remove residual solids prior to resuming filtration (Figure 3C). The filter bed is compressed as in the filtration mode and the air supply is turned off. However, in the flush mode, the flush water is provided through conduit **68** to the activated sludge reactor for additional treatment rather than being taken off through effluent conduit **67.**

The major parameters that impact filtration performance are the filtration rate, the depth of the media, the collector size, the porosity, and the influent quality. Typically, suspended solids in the influent and effluent wastewater can be correlated to turbidity, as is known to the skilled artisan. Turbidity monitoring equipment can be used in a conventional manner, as is believed to be understood by the skilled artisan, to determine the influent turbidity and to compare the influent turbidity to the effluent turbidity so as to monitor the performance of the filter.

Porosity and collector size of the filter media, in particular, impact effluent water quality and the development of headloss across the filter medium. Porosity is typically considered to be the ratio, expressed as a percentage, of the void spaces, or interstices, of the filter media to the total volume of the filter media. The collector size is typically considered to be the average diameter of the grains in the filter bed in a typical filter that includes a granular filtration medium. The collector size is normally defined as the average spacing between the pores in the filter bed.

The fluid to be filtered flows around the filtering medium in conventional sand or anthracite filters that are used in connection with tertiary wastewater treatment. Filter media has been found useful in the practice of the invention in which the fluid flows through the medium, rather than around the medium, unlike conventional filtration media. Filter media useful in the practice of the invention is also compressible, unlike conventional sand or anthracite media.

The collector size and the porosity, or void ratio, of the medium can be modified in accordance with the characteristics of the influent wastewater because the filter medium is compressible. Bed porosity and the collector size of the media is adjusted by adjusting the position of the upper movable plate.

The porosity and collector size of the filter medium can be altered during filtration to overcome the effect on effluent quality of variations in daily influent water quality and to increase the useful life of the filtration medium between washing steps. The filter bed can be mechanically expanded somewhat during filtration as headloss develops without a loss of filtration efficiency. Headloss through the medium can be monitored using pressure sensing equipment as is known in the art. Backwashing of the filter can be particularly efficient because the size of the filter bed and its porosity can be increased mechanically.

The filtration medium has low density, which typically is just slightly above the density of water. The porosity of the filter medium is estimated to be about 88 to 90 percent and the porosity of the uncompacted filter bed (Figure 3B) is about 92 to 94 percent.

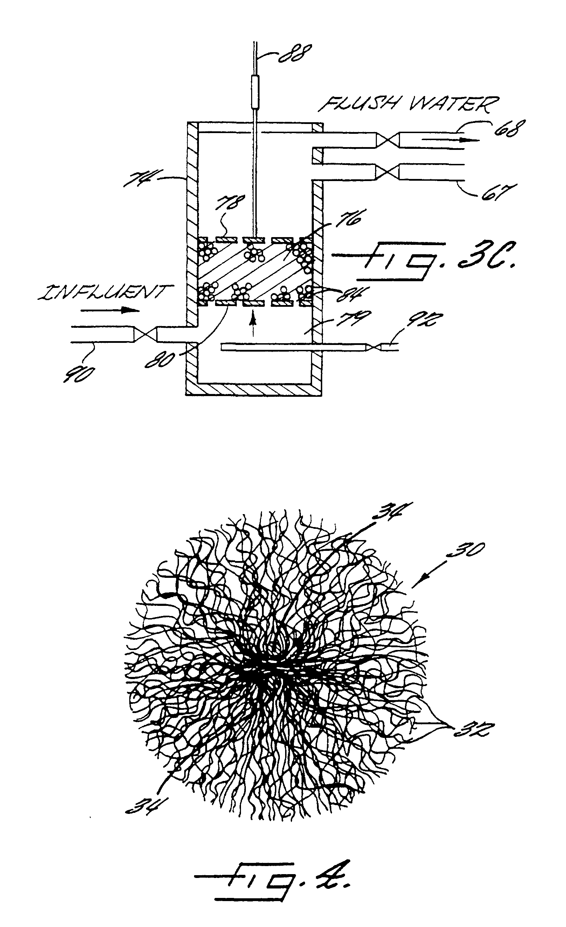

An example of filtration media useful in the practice of the invention described herein is described in Masuda et al. U.S. Patent No. 5,248,415. This media is represented in Figure 4 herein, generally at **30**. The fibrous lumps have many bundled crimpy fibers **32** formed by providing synthetic fibers of 20 to 200 denier with 2 to 10 crimps per inch. The bundled crimpy fibers are wrung and bundled at the core portion thereof by a binding wire **34**. The bundled crimpy fibers are rounded to provide the fibrous lump in the form of a substantial sphere having a diameter of 10 to 50 mm. A fiber having a higher specific gravity than water, for example, a polyvinylidene chloride fiber, is said to be optimal for the synthetic fiber to constitute the crimpy fiber. The fibers can also be made from polyvinylchloride, polyethylene fiber, or other synthetic fibers.

A filter as described above was evaluated to determine a range of useful operating parameters by adjusting the degree of compression of the filter bed at various flow rates and considering the influent and effluent turbidities, the removal efficiency for removal of suspended solids from the wastewater by the filter, and the development of headloss across the filter bed. The test unit had the following characteristics as shown in Table 1.

TABLE 1

| ITEM | UNIT | VALUE |
|---|---|---|
| *Filter Characteristics* | | |
| Overall outside | | |
| Length | m (ft) | 0.85 (2.75) |
| Width | m (ft) | 0.74 (2.4) |
| Height | m (ft) | 3 (9.85) |
| Filtration area | | |
| Length | m (ft) | 0.7 (2.3) |
| Width | m (ft) | 0,7 (2.3) |
| Area | $m^2$ ($ft^2$) | 0.49 (5.25) |
| Piping | | |
| Inlet | mm (in) | 100 (4) |
| Filtered water outlet | mm (in) | 150 (6) |
| Backwash water outlet | mm (in) | 150 (6) |
| Filter drain | mm (in) | 100 (4) |
| *Filter Operation* | | |
| Nominal flow rates | L/min (gal/min) | 100-795 (26-210) |
| Nominal filtration rates | $L/m^2 \cdot min$ | 205-1230 |

TABLE 1 (continued)

| ITEM | UNIT | VALUE |
|---|---|---|
| *Filter Operation* | | |
| | (gal/ft$^2$•min) | (5-30) |
| Maximum terminal headloss | mm (in) | 2,540 (100) |
| Nominal backwash rate | L/m$^2$•min | 410 |
| | (gal/ft$^2$•min) | (10) |

Effluent turbidity was plotted against influent turbidity in a series of 16 runs at four different filtration rates and four different filter bed compression levels. The filtration rates varied from 205 to 1230 L/m$^2$•min (5 to 30 gal/ft$^2$•min) and compression rates varied from 0 to 40 percent compression to evaluate influent and effluent turbidity, headloss across the filter medium, and fractional turbidity removal based on the influent and effluent turbidity. The uncompacted filter bed at 0 percent compression was approximately 30 inches (760 millimeters) deep. Filtration rates, compression levels, and medium depths for each run are summarized in Table 2 below.

TABLE 2

| Run no. | Filtration Rate | | Compression ratio % | Medium depth | | Estimated porosity % |
|---|---|---|---|---|---|---|
| | L/m$^2$•min | gal/ft$^2$•min | | mm | in | |
| 1 | 205 | 5 | 0 | 760 | 30 | 92 |
| 2 | 205 | 5 | 15 | 650 | 25.5 | 90.5 |
| 3 | 205 | 5 | 30 | 530 | 21 | 88.5 |
| 4 | 205 | 5 | 40 | 460 | 18 | 87 |
| 5 | 410 | 10 | 0 | 760 | 30 | 92 |
| 6 | 410 | 10 | 15 | 650 | 25.5 | 90.5 |
| 7 | 410 | 10 | 30 | 530 | 21 | 88.5 |
| 8 | 410 | 10 | 40 | 460 | 18 | 87 |
| 9 | 820 | 20 | 0 | 760 | 30 | 92 |
| 10 | 820 | 20 | 15 | 650 | 25.5 | 90.5 |
| 11 | 820 | 20 | 30 | 530 | 21 | 88.5 |
| 12 | 820 | 20 | 40 | 460 | 18 | 87 |
| 13 | 1230 | 30 | 0 | 760 | 30 | 92 |
| 14 | 1230 | 30 | 15 | 650 | 25.5 | 90.5 |
| 15 | 1230 | 30 | 30 | 530 | 21 | 88.5 |
| 16 | 1230 | 30 | 40 | 460 | 18 | 87 |

The backwash flow rate for the filtration unit was set in a conventional manner using a bypass loop located in the conduit supplying influent to the filtration unit. The bypass loop was equipped with a ball valve that was used to regulate the backwash flow rate. The influent conduit was equipped with a gate valve followed by an automatic ball valve opposite the bypass loop. The gate valve was used to regulate the filtration rate and the automatic ball valve was used to divert flow to the bypass loop where the backwash flow rate could be adjusted as soon as the backwash cycle started. The backwash flow rate was set to approximately 410 L/m$_2$•min. (10 gal/ft$^2$•min) for all of the 16 runs.

A terminal headloss value of 2540 mm (100 inches) of water was selected for all of the runs. Turbidity sampling was accomplished at about 400 ml/min for all runs. Suspended solids were correlated to turbidity values according to standard, art recognized methods.

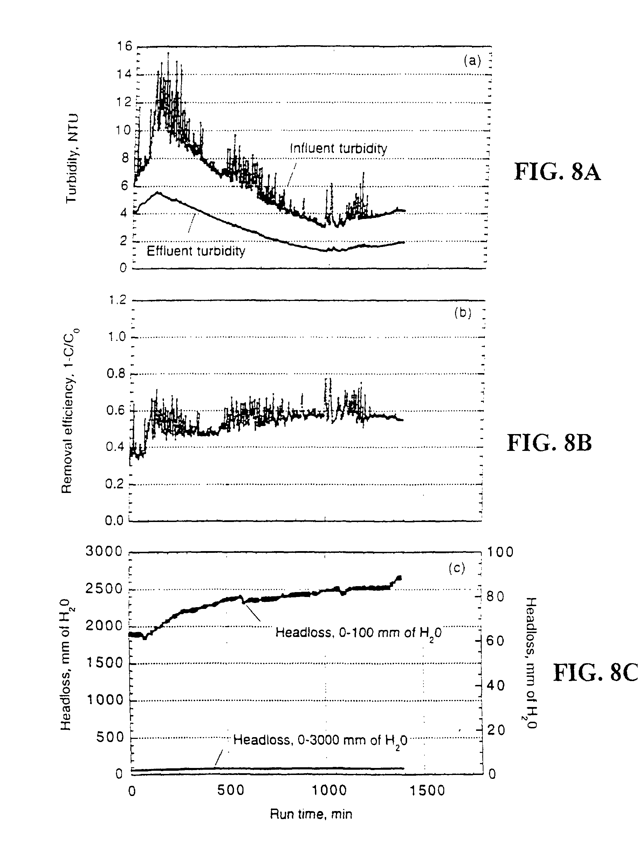

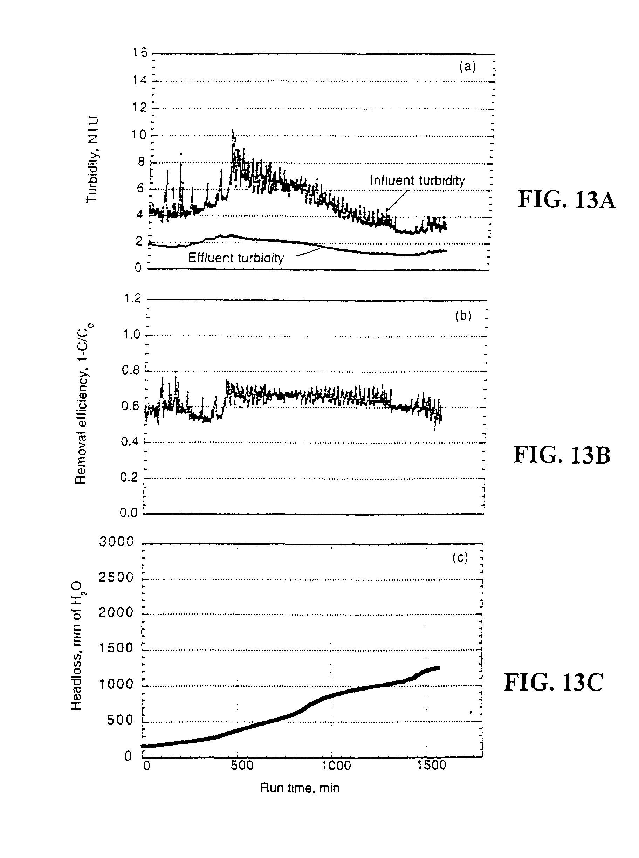

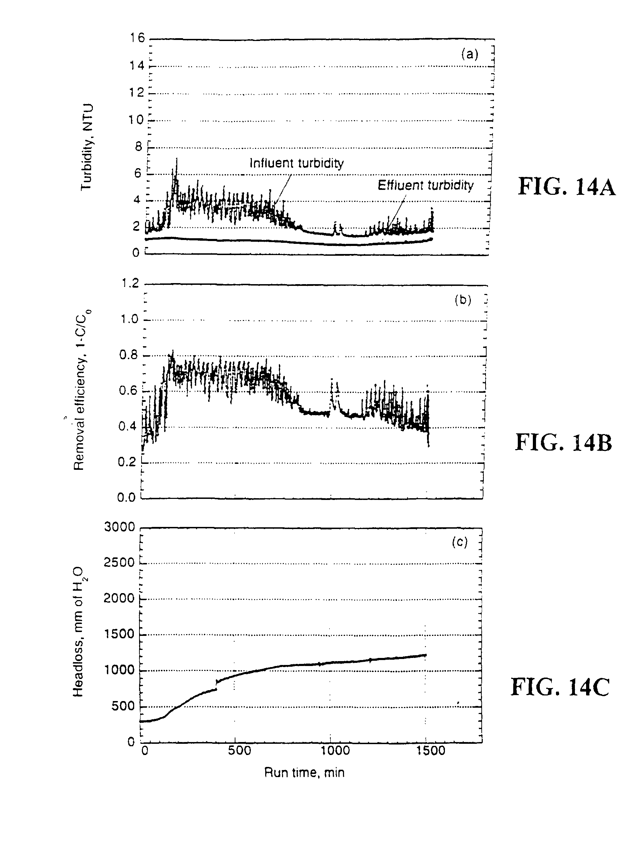

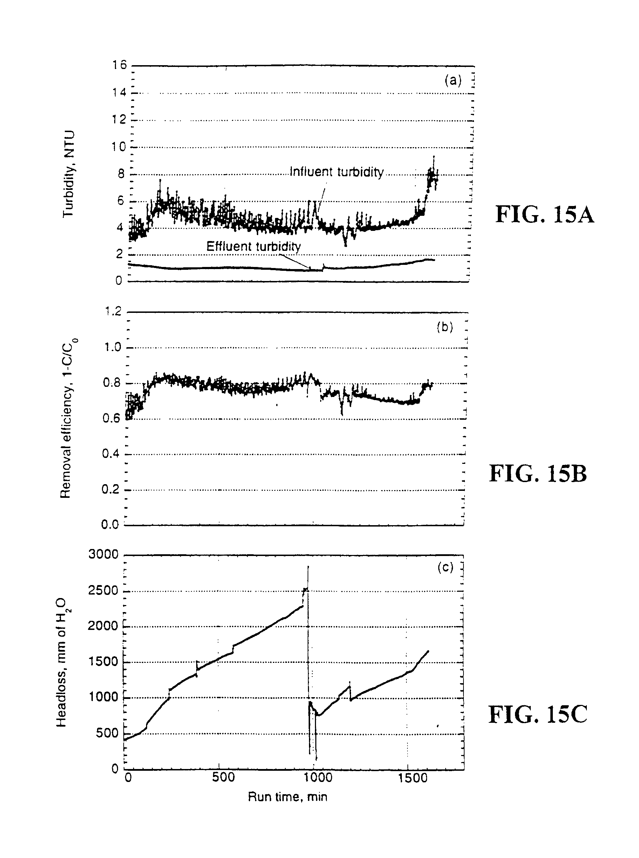

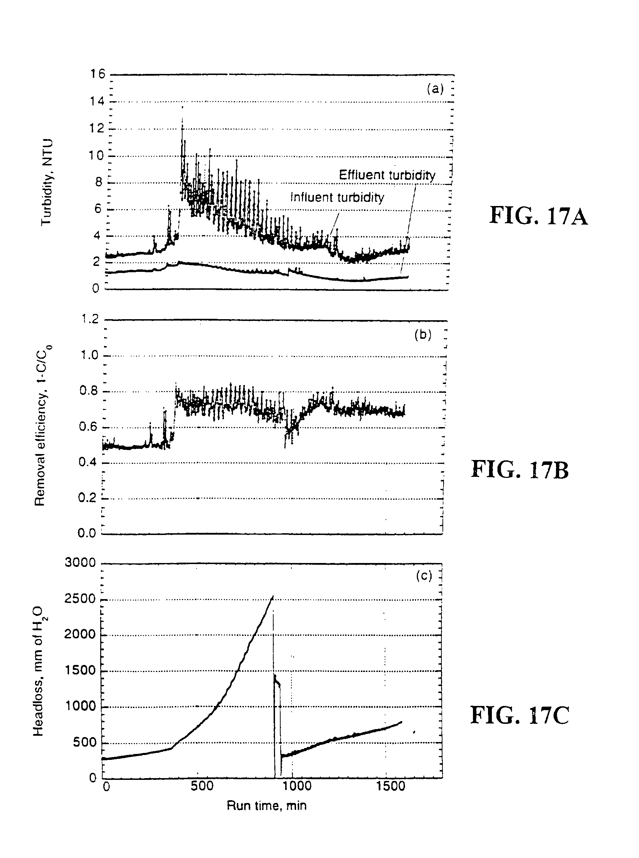

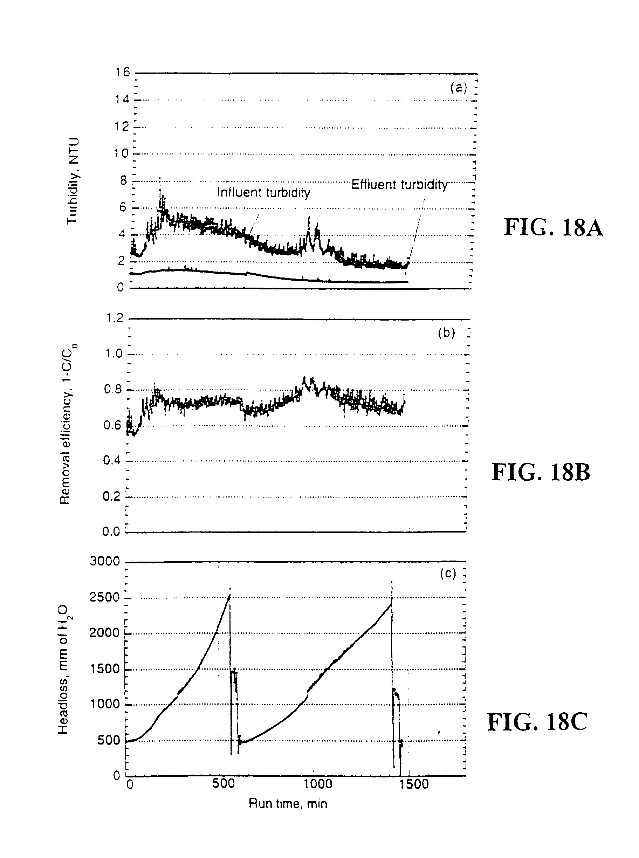

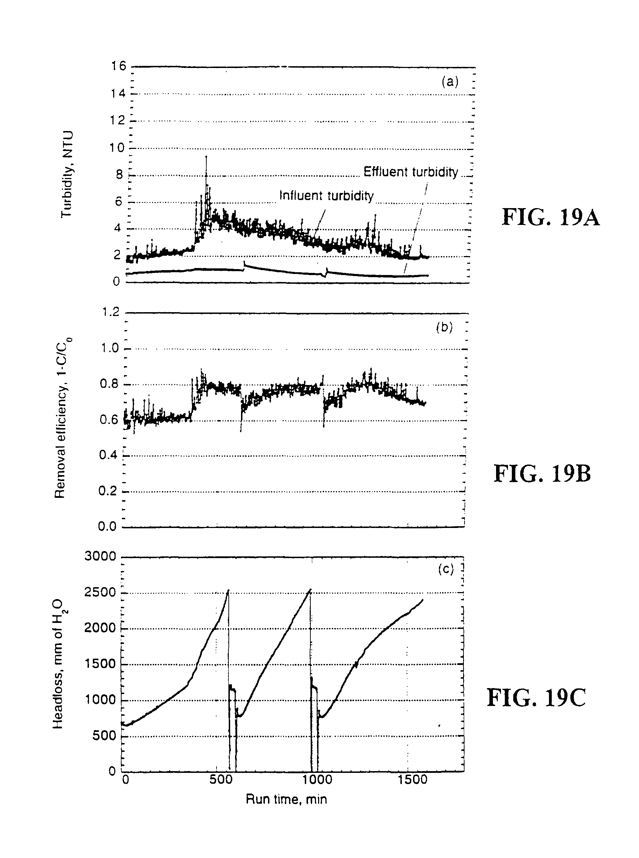

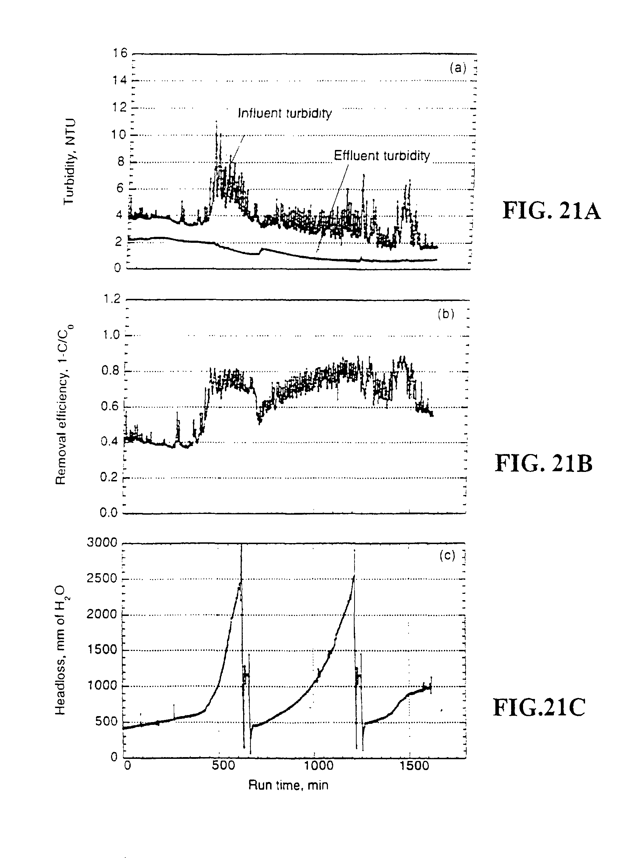

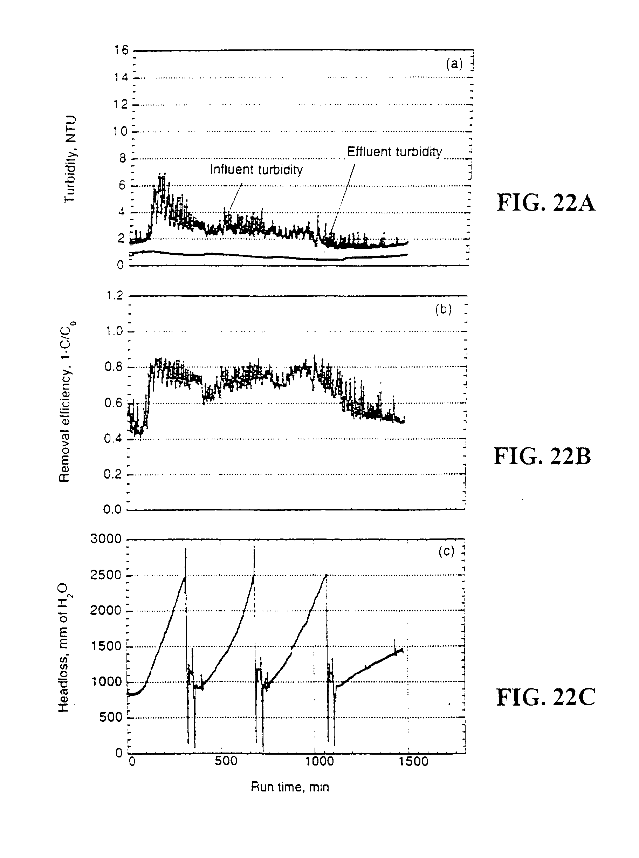

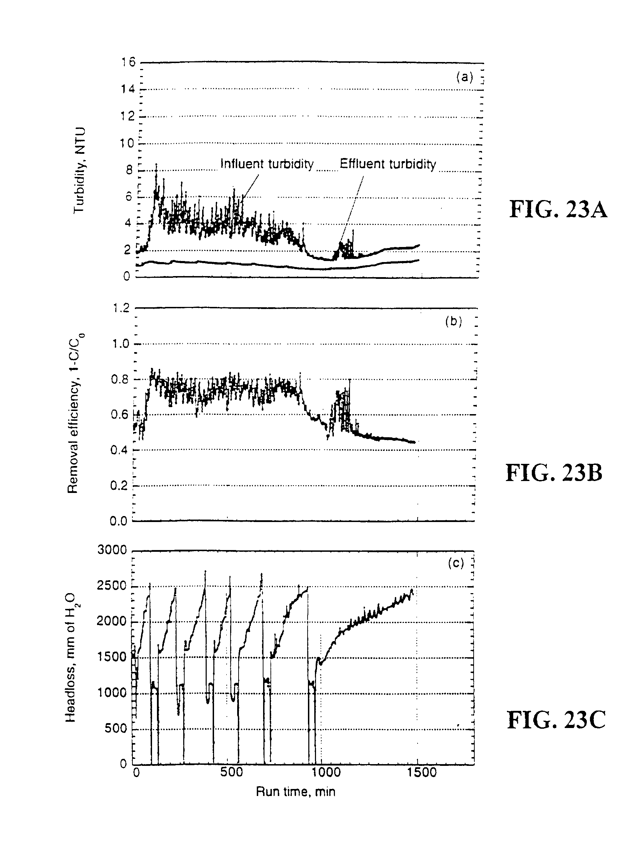

The results of the 16 runs are plotted in Figures 8A through 23C. Figures A are plots of effluent and influent turbidity against time. Figures B are plots of suspended solids (turbidity) removal efficiency against time. Fractional turbidity removal versus time data was obtained by using the influent and effluent turbidities obtained in Figures A and with respect to the following relationship: removal efficiency = 1 - (effluent turbidity/influent turbidity). Initial headloss and the development of headloss across the filter medium was monitored continuously. The results are plotted in Figures C for Figures 8 through 23.

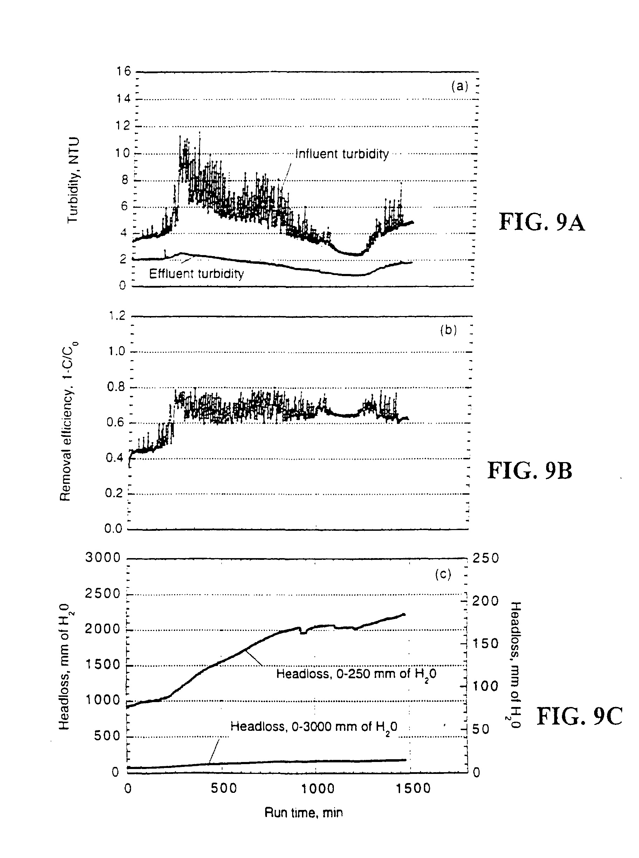

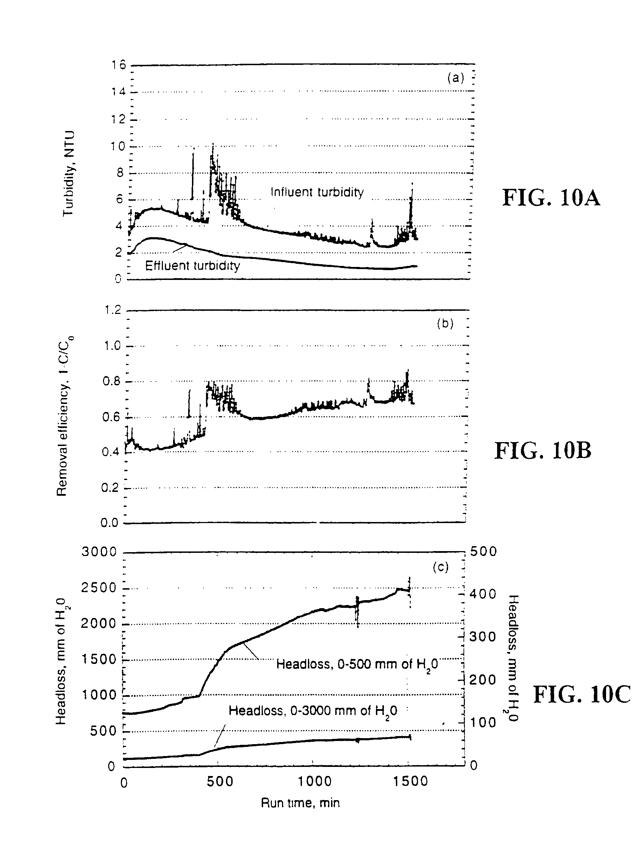

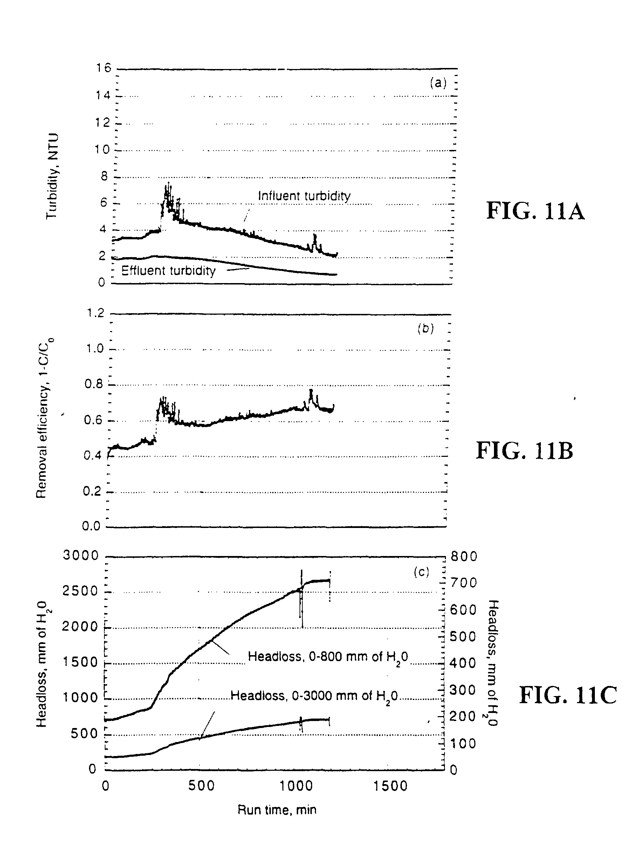

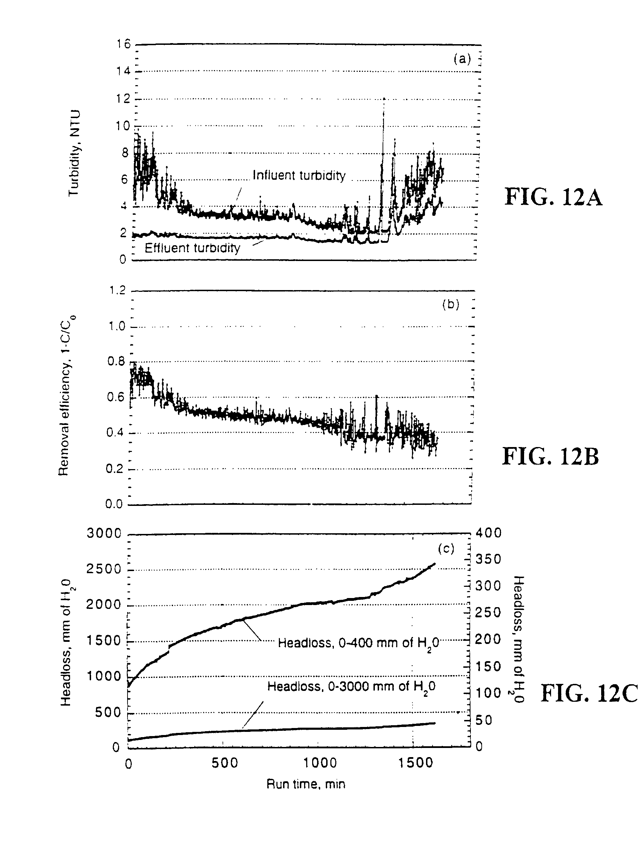

Figures 8 through 11 are for filtration of wastewater at a rate of 205 L/m$_2$•min (5 gal/ft$^2$•min). Figure 8 shows an initial bed depth of 30 inches at 0 percent compression. Figure 9 is at 15 percent compression; Figure 10 is at 30 percent compression; and Figure 11 is at 40 percent compression. Figures 12 through 15 are at a filtration rate of 410

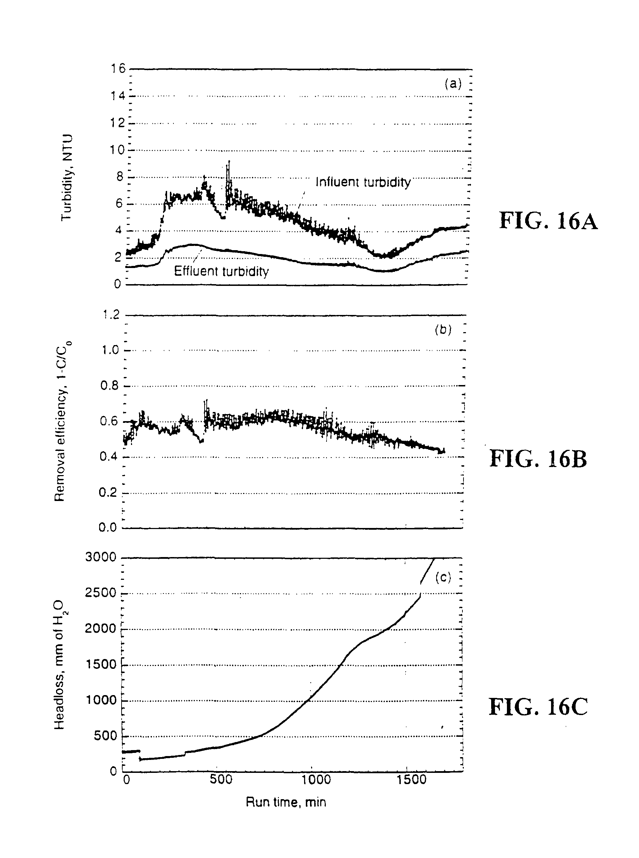

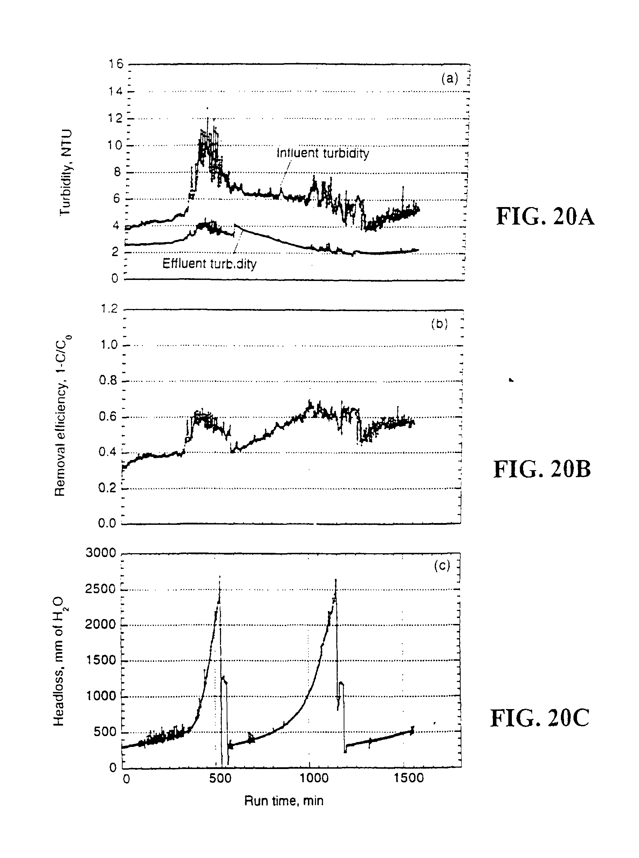

L/m$^2$•min (10 gal/ft$^2$•min) at four different bed compressions of 0 percent, 15 percent, 30 percent, and 40 percent. Figures 16 through 19 are taken at a filtration rate of 820 L/m$^2$•min (20 gal/ft$^2$•min) at four different bed compressions of 0 percent, 15 percent, 30 percent, and 40 percent. Figures 20 through 23 are taken at 1230 L/m$^2$•min (30 gal/ft$^2$•min) at four different bed compressions of 0 percent, 15 percent, 30 percent, and 40 percent.

It is shown in these Figures that as the degree of bed compression is increased, the overall turbidity removal increases. Indeed, at a low flow rate of 205 L/m$^2$•min (5 gal/ft$^2$•min) filter ripening was observed and the flow occurred primarily around the filter medium rather than through the medium as is the case at higher filtration rates. The removal efficiency is reduced when the flow is around the filter medium because the suspended solids and the liquid can move through the relatively larger intersticies between the individual filter lumps. However, as material begins to accumulate within the filter bed and to participate in filtration, the removal efficiency increases. Ripening is not as significant at higher filtration rates because the removal of suspended solids occurs primarily through the medium and not around the medium.

When the flow is through the medium, the collector size, which can be defined as the size of the grains in a granular filter medium, can be defined with the filter medium as used in the invention as the average pore spacing within the structure of the individual filter lump. Trapped particles tend to decrease the collector size of the medium and results in an increase in the removal of additional particles by interception and straining. When the flow is around the filter medium, the collector size is defined as the nominal diameter of one fibrous lump. The difference between the initial collector size and the collector size at any time during the filtration cycle is much larger when the flow occurs around the medium, and therefore filter ripening becomes more important at low filtration rates.

The porosity, depth of the filter bed, and collector size can all be altered, even during the filtration cycle, because the filter medium is compressible. The maximum removal efficiency that can be achieved is somewhat dependent on the characteristics of the material being filtered, which is primarily colloidal. Removal efficiency typically increases as the filter bed is compressed until some maximum level is reached. For example, as shown in Figures 8B through 11B, the average removal efficiency of the filter increased from about 55 percent at 0 percent bed compression to about 61 percent at 30 percent bed compression when the flow rate was at 205 L/m$^2$•min (5 gal/ft$^2$•min). At 410 L/m$^2$•min (10 gal/ft$^2$•min), the removal efficiency of the filter increased from 48 percent at 0 percent bed compression to 65 percent at 30 percent bed compression.

The maximum removal efficiency in the practice of the invention occurs at different compression levels as the filtration rate is increased and the characteristics of the influent to the filter change. Maximum removal efficiency was observed to occur at 40 percent bed compression at a filtration rate of 410 L/m$^2$•min (10 gal/ft$^2$•min). However, at flow rates of 820 to 1230 L/m$^2$•min (20 to 30 gal/ft$^2$•min), maximum removal efficiency occurred at 30 percent bed compression.

It should be recognized that the filtration system of the invention can be usefully operated at flow rates above 1230 L/m$^2$•min (30 gal/ft$^2$•min) depending on the influent quality, the desired effluent quality, and the head loss across the filter. For example, if the effluent is to retain some nutrient quality for use as fertilizer, then the filter influent typically is taken from a primary clarifier. Depending on the influent quality and desired effluent quality, the filter should be operable at increased flow rates above 1230 L/m$^2$•min (30 gal/ft$^2$•min) so long as the increase in the rate of head loss across the filter provides economical operation. Flow rates of from about 1640 L/m$^2$•min (40 gal/ft$^2$•min) to 2050 L/m$^2$•min (50 gal/ft$^2$•min) should be useful in this regard.

As shown in Figures 8B through 23B, removal efficiency is not significantly impacted by the filtration rate. Instead, removal efficiency is impacted more by the compression of the filter medium.

It should be noted that the removal efficiency appears to be lower when the influent turbidity is in the range of from 1.5 to 3 NTU. At low influent turbidity, the particle size of the influent solids is shifted more towards the smaller colloidal size particles than the typical particle size distribution observed when the influent turbidity is higher than 3 NTU. The turbidity of the secondary effluent from a typical activated sludge wastewater treatment plant is in the range of from 3 to 8 NTU. Accordingly, in the case where the turbidity is in the range of from 1.5 to less than about 3 NTU, the performance of the filter cannot be evaluated solely based on the removal efficiency data.

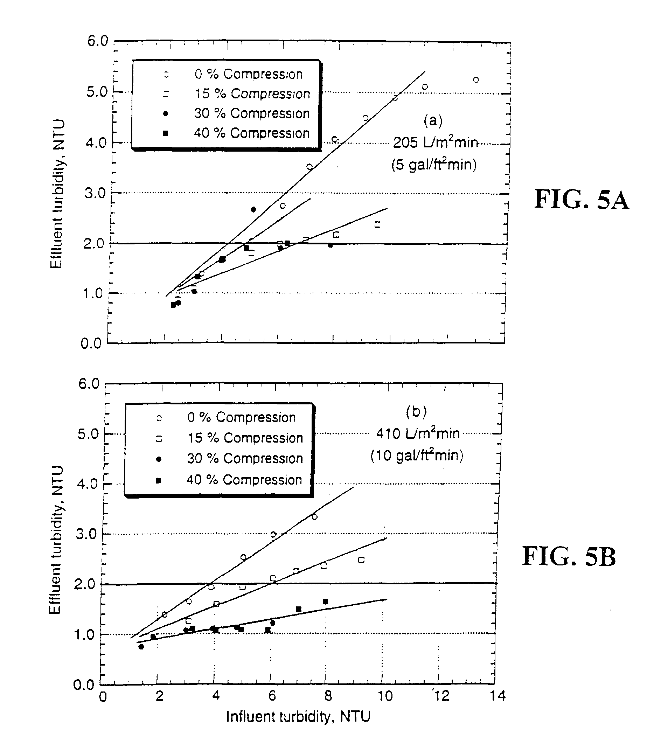

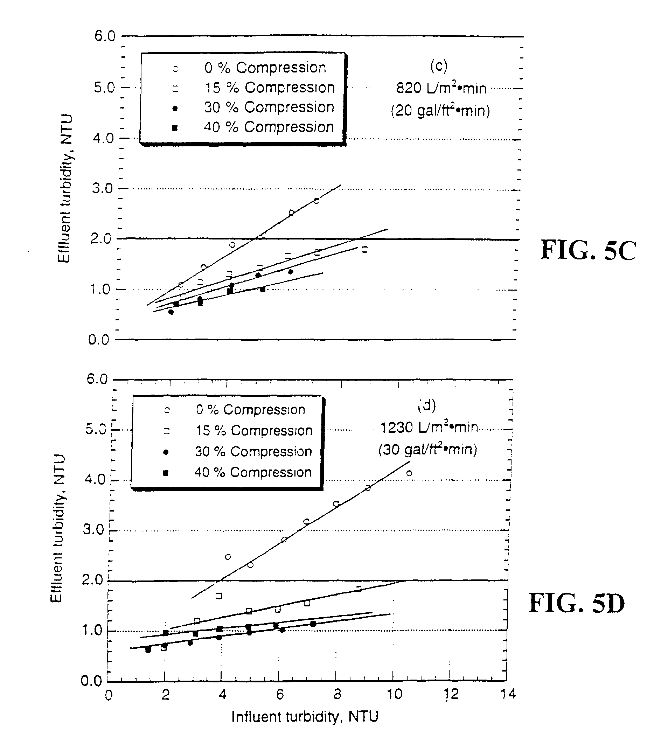

An effluent turbidity versus influent turbidity analysis was performed to determine the various influent turbidity values that can be filtered with the filter of the invention without the use of chemicals and without exceeding an effluent turbidity unit of 2 NTU, which is the current requirement under Title 22 of the California Administrative Code. The results of the analysis are plotted in Figures 5A through 5D at four different filtration rates from 205 to 1230 L/m$^2$•min (5 to 30 gal/ft$^2$•min). As shown in Figures 5A through 5D, required effluent turbidity values can be achieved from increasing influent turbidity as the compression of the filter bed increases at all of the filtration rates evaluated.

As evaluated, it has been determined that the effluent turbidity typically is equal to or lower than 2 NTU for influent turbidity values of up to about 8 NTU when the flow rate is from about 410 to 1230 L/m$^2$•min (10 to 30 gal/ft$^2$•min). If the influent turbidity is from about 7 to 10 NTU, then chemical addition normally is required to produce an effluent with an average turbidity of 2 NTU or less.

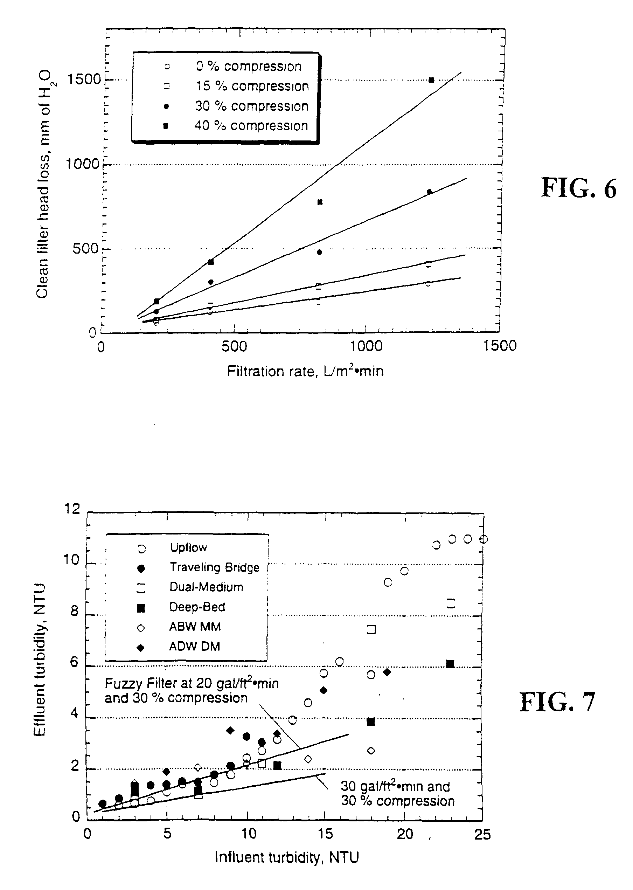

It should be noted that this performance in terms of the influent and effluent turbidity values is comparable to that for the operation of conventional filters, as reflected in Figure 7. The principal types of conventional filtration technologies include 1) conventional mono-, dual-, and multi-medium downward flow filters, 2) deep-bed downward flow and/or upflow mono-medium filters, 3) post-bed mono-medium downward flow filters, 4) shallow-depth single and dual-medium downward flow traveling bridge filters, and 5) continuous backwash upflow unstratified mono-medium deep bed filters. Nevertheless, the filter as described herein achieves these performance levels at filtration rates that vary from 6 to 15 times as great as those for conventional filters. Thus, the overall efficiency of filtration achieved with the practice of the invention is many times greater than that with conventional filters.

Clean filter headloss, the development of headloss during filtration, and the development of headloss with the accumulation of solids is effected by the filtration rate and the compression of the bed. Clean filter headloss is plotted against filtration rate for the 4 filtration rates that were evaluated at 4 different bed compressions in Figure 6. As shown in Figure 6, the initial headloss at a flowrate of 205 L/m$^2$•min (5 gal/ft$^2$•min) and at 0 percent bed compression is 63 mm (2.5 inches) of water. This initial value increases linearly to a value of 127 mm (5 inches) of water at a flowrate of 410 L/m$^2$•min (10 gal/ft$^2$•min) at 0 percent compression. The linear increase in headloss tends to indicate that the flow regimen through the filter is laminar.

The impact of compression of the bed is clearly evident in the curves plotted in Figure 6. Increase in headloss at any given filtration rate, however, is not a linear function of the degree of compression. Increasing the degree of bed compression increases both the removal efficiency and the headloss occurring across the filter medium. Thus, it is important to identify a compression level at which the desired effluent quality is achieved while keeping headloss occurring across the filter medium within reasonable levels.

The development of headloss with time for the different filtration rates and bed compression values is illustrated in Figures 8C through 23C. As shown in these figures, depending on the filtration rate, there is a gradual build up of headloss with time as suspended solids accumulate within the filter. At some critical point, the headloss starts to increase curvalinearly, which is characteristic of removal by straining.

The relationship of the development of headloss across the filter medium to the accumulation of suspended solids in the medium was evaluated as follows. Suspended solids accumulation in the filter medium was calculated by using the influent/effluent turbidities versus time data shown in Figures 8A through 23A and the following mathematical relationship

$$\text{Suspended solids (g/L)} = 0.0023 \times \text{Turbidity (NTU)}$$

The suspended solids accumulation in the medium at any time is calculated by the following mass balance equation

$$SS_{acc} = 0.0023\,\Delta t\,\frac{Q}{V}\sum_{i=1}^{1=t/\Delta t}\left(Turb_{inf} - Turb_{eff}\right)_i$$

where

SSacc = suspended solids accumulation at time t, g/m$^3$
Q = filtration rate, L/min
V = volume of filter medium, m$^3$
$\Delta t$ = data collection frequency, min
Turb$_{inf}$ = influent turbidity, NTU
Turb$_{eff}$ = effluent turbidity, NTU
i = time index of the collected data

The development of headloss with time is shown in Figures 8C through 23C.

It is also important to evaluate the quantity of backwash water that is used relative to the amount of water processed to determine the efficiency of the filter. Summary data on the operation of the filter as described, including backwash, water use, and water production are presented in Table 3.

TABLE 3

| Run No. | Filtration rate | | Comp. ratio, % | Back Wash water % | Total water produced | |
|---|---|---|---|---|---|---|
| | $L/m^2 \cdot min$ | $gal/ft^2 \cdot min$ | | | $L/m^2 \cdot d$ | $gal/ft^2 \cdot d$ |
| 1 | 205 | 5 | 0 | 4.1 | 289,000 | 7,083 |
| 2 | 205 | 5 | 15 | 4.1 | 289,000 | 7,083 |
| 3 | 205 | 5 | 30 | 4.1 | 289,000 | 7,083 |
| 4 | 205 | 5 | 40 | 4.1 | 289,000 | 7,083 |
| 5 | 410 | 10 | 0 | 2.1 | 578,000 | 14,170 |
| 6 | 410 | 10 | 15 | 2.1 | 578,000 | 14,170 |
| 7 | 410 | 10 | 30 | 2.1 | 578,000 | 14,170 |
| 8 | 410 | 10 | 40 | 3.1 | 572,000 | 14,020 |
| 9 | 820 | 20 | 0 | 1.1 | 1,156,200 | 28,340 |
| 10 | 820 | 20 | 15 | 1.7 | 1,139,800 | 27,940 |
| 11 | 820 | 20 | 30 | 2.0 | 1,131,600 | 27,735 |
| 12 | 820 | 20 | 40 | 2.8 | 1,115,200 | 27,333 |
| 13 | 1,230 | 30 | 0 | 1.8 | 1,685,100 | 41,300 |
| 14 | 1,230 | 30 | 15 | 1.8 | 1,672,800 | 41,000 |
| 15 | 1,230 | 30 | 30 | 3.1 | 1,629,750 | 39,950 |
| 16 | 1,230 | 30 | 40 | 5.4 | 1,500,600 | 36,780 |

Secondary effluent, which is used as the influent to the filter for tertiary treatment of wastewater, can be used as the backwash water. A backwash rate of 410 $L/m^2 \cdot min$ (10 $gal/ft^2 \cdot min$) was observed to be sufficient to clean up the medium. The clean up operation of the filter medium took approximately 30 minutes, although shorter backwash cycle times should be achievable. The percentage of the total water used for backwashing the filter, as summarized in Table 3, was computed using the following expression:

$$\text{Backwash water, } \% = \frac{W_B}{W_F + W_B} \times 100$$

Where

$W_B$ = water used for backwashing the filter
$W_F$ = total filtered water

The ability to reduce the amount of backwash water has significant cost implications with respect to sizing of the wastewater treatment process. Typical backwash percentage for most conventional effluent filters is from 6 to 15 percent, so significant economies are gained by practice of the invention described herein. It should also be noted that the filtration apparatus described in the Masuda et al. U.S. Patent No. 5,248,415 typically required washing the filter media on a frequent basis at a full flow rate equivalent to the flowrate of the wastewater.

The filtration system described herein was evaluated with respect to the amount of water that was produced per day. Taking into account the water used for backwashing, the water production rate for various filtration rates and bed compression ratios is reported in the last two columns of Table 3. As shown, it is possible to produce 1,672,800 $L/m^2 \cdot day$ (41,000 $gal/ft^2 \cdot day$) at a filtration rate of 1230 $L/m^2 \cdot min$ (30 $gal/ft^2 \cdot min$) at a bed compression of 15 percent.

The ability to compress the filter medium is a significant factor in the operation of the filter of the invention as described. The porosity of the bed can be modified to meet the characteristics of the influent liquid. The porosity of the bed can be altered without significantly effecting filtration efficiency to delay the onset of an unacceptable headloss across the filter medium, thus further extending the useful life of the filter between backwashing cycles. Because the bed is so highly porous, significantly higher filtration rates can be used as compared to conventional granular medium filters which filter from 80 to 410 $L/m^2 \cdot min$ (2 to 10 $gal/ft^2 \cdot min$). In contrast, filtration rates of from 820 to 1230 $L/m^2 \cdot min$ (20 to 30 $gal/ft^2 \cdot min$) are achievable in the practice of the invention. The optimum filtration rate appears to be in the range of from 820 to 1230 $L/m^2 \cdot min$ (20 to 30 $gal/ft^2 \cdot min$) at a bed compression of from about 15 to 30 percent. Effluent turbidity values of 2 NTU or lower can be achieved without chemical addition for influent turbidity values of up to approximately 8 NTU when the flow is between 820 to 1230 $L/m^2 \cdot min$ (20 to 30 $gal/ft^2 \cdot min$) at a bed compression ratio of from about 15 to 40 percent.

Secondary effluent can be used as the backwash water. A flowrate of 410 L/m$^2$•min (10 gal/ft$^2$•min) was observed to be sufficient to clean the filter medium. The percentage of backwash water required at filtration rates of 820 and 1230 L/m$^2$•min (20 to 30 gal/ft$^2$•min) and at bed compression values of between 20 and 30 percent varied from about 1.1 to 3.1 percent, which is extremely efficient by comparison with conventional technologies.

## Claims

1. Filtration apparatus (72) comprising:

    a filter housing (74) having a fluid inlet (64) and a fluid outlet (67);
    a compressible fibrous lump filtration media (30) of adjustable porosity which is defined as ratio (%) of the void spaces, or interstices, of the filter media to the total volume of the filter media and collector size which is defined as average spacing between the pores in the filter media disposed in a filter bed (76) within said filter housing (74) between said fluid inlet (64) and said fluid outlet (67);
    means for adjusting the porosity and collector size of the filtration media (30), said means including means for compressing which are arranged in such a way, that they compress said filtration media (30) in a compression gradient proceeding from more compressed to less compressed in a direction opposite to the flow of fluid so that filtration proceeds in a direction from a more porous to a less porous filter.

2. Apparatus (72) of claim 1 wherein said means for compressing said filtration media (30) comprises:

    a first perforated panel (80) immovably mounted within said apparatus (72);
    a second perforated panel (78) movably mounted within said apparatus (72) and spaced above said first perforated panel (80), said filtration media being positioned between said two panels; and
    means for selectively moving said movably mounted second perforated panel (78) toward and away from said first perforated panel (80), said means being located above said second perforated panel (78).

3. Apparatus (72) of claim 2 further comprising means for agitating said filter media (30) in an uncompressed condition to clean said filter media (30).

4. Apparatus (72) fo claim 1 wherein said fluid inlet (64) is disposed below said fluid outlet (67) and said filter is operated in an upflow mode.

5. Apparatus (72) of claim 1 wherein said means for adjusting the porosity and collector size of the filtration media (30) is adjustable during filtration.

6. Apparatus (72) of claim 1 wherein said filter bed (76) has a porosity of about 92 to 94% prior to compression and a porosity of from about 87 to 90% when compressed.

7. Apparatus (72) of claim 1 wherein said filter bed (76) prior to compression has a depth of at least about 30 inches (760 mm).

8. Apparatus (72) of claim 1 wherein said apparatus (72) is operable for filtration at a fluid flow rate of from about 205 to 1230 L/m$^2$ min (5 to 30 gal/ft$^2$ min), at a bed compression ratio of from about 0 to 40 percent, and at a backwash rate of from about 1 to 6 percent based on the total fluid passing through the filter.

9. Apparatus (72) of claim 8 wherein said fluid flow rate is from about 410 to 1230 L/m$^2$ min (10 to 30 gal/ft$^2$ min).

10. Apparatus (72) of claim 8 wherein said fluid flow rate is from about 820 to 1230 L/m$^2$ min (20 to 30 gal/ft$^2$ min).

11. Apparatus (72) according to claims 1, 2 and 4, wherein the porosity of said filter bed (76) can be adjusted from a porosity of about 92 to 94% prior to compression to a porosity of from about 87 to 90% when compressed.

12. Apparatus (72) of claim 1 wherein said apparatus (72) is operable for filtration at a fluid flow rate of from about 820 to 1230 L/m$^2$ min (20 to 30 gal/ft$^2$ min), at a bed compression ratio from about 15 to 40 percent, and at a backwash rate of from about 1 to 6 percent based on the total fluid passing through the filter.

**13.** Filtration apparatus (72) for wastewater treatment according to claims 1, 2 and 4, wherein

said filtration media (30) is disposed between first and second perforated panels (80, 78) and defining said filter bed (76),
wherein said filter bed (76) is expanded for cleaning; and
wherein means are provided for introducing a gas into said wastewater when said filter bed (76) is expanded for cleaning.

**14.** The apparatus (72) of claim 13 wherein said inlet (64) further comprises a plenum (79) to evenly distribute the wastewater through said first perforated panel (80).

**15.** Apparatus (72) of claim 14 wherein said apparatus (72) is operable for filtration to reduce the turbidity of influent wastewater from about 8 NTU to about 2 NTU at a wastewater flow rate of from about 820 to 1230 L/m$^2$ min (20 to 30 gat/ft$^2$ min), at a bed compression ratio of from about 15 to 40 percent, and at a backwash rate of from about 1 to 6 percent based on the total wastewater passing through the filter.

**16.** Apparatus (72) of claim 15 wherein the backwash flow rate is from about 1 to 3 percent based on the total wastewater passing through the filter.

**17.** A process for filtering a fluid comprising the steps of:

a) compressing a compressible fibrous lump filtration media disposed in a filter bed to define a porosity gradient in the filter bed proceeding from more porous to less porous in a direction opposite to the flow of fluid so that filtration proceeds in a direction from a more porous to a less porous filter bed; and
b) passing fluid through said filter bed;
c) periodically expanding the filter bed while continuing to pass fluid through the filter bed to clean the filtration media.

**18.** The process of claim 17 wherein the fluid is a liquid and gas is injected into the liquid prior to entering the filter bed for additional cleaning of the media.

**19.** The process of claim 17 further comprising the step of removing progressively smaller particles from the fluid as filtration proceeds from a more porous to a less porous media.

**20.** The process of claim 17 further comprising the step of altering the compression of the media during filtration in response to incoming fluid conditions.

**21.** The process of claim 17 further comprising the steps of monitoring head loss across the filter bed and altering the compression of the media during filtration to reduce head loss and to increase the time between periodic cleanings.

**22.** A process for filtering a liquid to remove particles therefrom according to claim 17 further comprising the steps of:

b1) removing progressively smaller particles from the liquid as filtration proceeds form a more porous to a less porous media;
b2) monitoring head loss across the filter bed;
c) periodically expanding the filter bed when a maximum head loss has been reached while continuing to pass liquid through the filter bed to clean the filtration media.

**23.** The process of claim 22 wherein liquid is passed through the expanded filter bed at a rate that is from about 1 to 6% of the total liquid flow through the filter bed.

**24.** The process of claim 17 wherein the filter bed is compressed to a compression ratio of from about 15 to 40 percent, liquid is passed through the compressed filter bed at a flow rate of from about 205 to 1230 L/m$^2$ min (5 to 30 gal/ft$^2$ min), and backwash liquid is passed through the filter at a backwash rate of from about 1 to 6 percent based on the total fluid passing through the filter.

**25.** The process of claim 22 wherein the filter bed is compressed from a porosity of from about 92 to 94% to a minimum porosity of from about 87 to 90%.

**26.** The process of claim 22 wherein maximum removal efficiency is reached at a bed compression of 40% at a liquid flowrate of 820 L/m$^2$ min (20 gal/ft$^2$ min) and a bed compression of 30% at at flow rate of 1230 L/m$^2$ min.

**27.** A process for tertiary wastewater treatment comprising the steps of:

  a) treating wastewater in an activated sludge reactor to provide a primary effluent;
  b) treating the primary effluent in a clarifier to provide a secondary effluent;
  c) filtering the secondary effluent according to the process of claim 17 to provide a tertiary effluent.

**28.** The process of claim 27 wherein the filtration apparatus is operable for filtration to reduce the turbidity of influent wastewater from about 8 NTU to about 2 NTU at a wastewater flow rate of from about 820 to 1230 L/m$^2$ min (20 to 30 gal/ft$^2$ min), at a bed compression ratio of from about 15 to 40 percent, and at a backwash rate of from about 1 to 6 percent based on the total wastewater passing through the filter.

**29.** The process of claim 28 wherein the backwash flow rate is from about 1 to 3 percent based on the total wastewater passing through the filter.

**30.** The process of claim 27 wherein the water production rate of a filter of at least 76 cm (30 inches) uncompressed depth and at an effluent quality of 2 NTU or less based on an influent quality of up to 8 NTU is over 1,000,000 L/m$^2$ day (28,000 gal/ft$^2$ day).

**Patentansprüche**

**1.** Filtrationsvorrichtung (72), umfassend:

  Ein Filtergehäuse (74), das einen Fluideinlass (64) und einen Fluidauslass (67) aufweist;
  ein komprimierbares faseriges klumpenförmiges Filtrationsmittel (30) mit einstellbarer Porosität, die als das Verhältnis (%) von Leerräumen oder Zwischenräumen des Filtermittels zu dem gesamten Volumen des Filtermittels definiert ist, und Abscheidergröße, die als der mittlere Abstand zwischen den Poren in dem Filtermittel definiert ist, welches in einem Filterbett (76) innerhalb des Filtergehäuses (74) zwischen dem Fluideinlass (64) und dem Fluidauslass (67) angeordnet ist;
  ein Mittel zum Einstellen der Porosität und der Abscheidergröße des Filtrationsmittels (30), wobei das Mittel Mittel zum Komprimieren umfasst, die derart angeordnet sind, dass sie das Filtrationsmittel (30) mit einem Komprimierungsgradienten komprimieren, der von mehr komprimiert zu weniger komprimiert in einer Richtung entgegen dem Fluss des Fluids verläuft, so dass die Filtration in einer Richtung von einem porösen zu einem weniger porösen Filter verläuft.

**2.** Vorrichtung (72) nach Anspruch 1, wobei das Mittel zum Komprimieren des Filtrationsmittels (30) umfasst:

  Eine erste Lochplatte (80), die unbewegbar innerhalb der Vorrichtung (72) angeordnet ist;
  eine zweite Lochplatte (78), die bewegbar innerhalb der Vorrichtung (72) und mit einem Zwischenraum oberhalb der ersten Lochplatte (80) angeordnet ist, wobei das Filtrationsmittel zwischen den zwei Platten positioniert ist; und
  ein Mittel zum selektiven Bewegen der bewegbar angeordneten zweiten Lochplatte (78) hin zu und weg von der ersten Lochplatte (80), wobei das Mittel oberhalb der zweiten Lochplatte (78) angeordnet ist.

**3.** Vorrichtung (72) nach Anspruch 2, die ferner Mittel zum Bewegen des Filtermittels (30) in einen unkomprimierten Zustand umfasst, um das Filtermittel (30) zu reinigen.

**4.** Vorrichtung (72) nach Anspruch 1, wobei der Fluideinlass (64) unterhalb des Fluidauslasses (67) angeordnet ist und der Filter in einer Aufwärtsströmungsbetriebsart betrieben ist.

**5.** Vorrichtung (72) nach Anspruch 1, wobei das Mittel zum Einstellen der Porosität und der Abscheidergröße des Filtrationsmittels (30) während der Filtration einstellbar ist.

**6.** Vorrichtung (72) nach Anspruch 1, wobei das Filterbett (76) vor der Komprimierung eine Porosität von ungefähr 92 bis 94% und eine Porosität von ungefähr 87 bis 90% aufweist, wenn es komprimiert ist.

**7.** Vorrichtung (72) nach Anspruch 1, wobei das Filterbett (76) vor der Komprimierung eine Tiefe von mindestens etwa 30 Inchen (760 mm) aufweist.

**8.** Vorrichtung (72) nach Anspruch 1, wobei die Vorrichtung (72) zur Filtration bei einer Fluidflussrate von ungefähr 205 bis 1230 L/m$^2$ min (5 bis 30 gal/ft$^2$ min), bei einem Bettkomprimierungsverhältnis von ungefähr 0 bis 40 Prozent und bei einer Rückspülungsrate von ungefähr 1 bis 6 Prozent, bezogen auf das gesamte Fluid, das durch den Filter tritt, betreibbar ist.

**9.** Vorrichtung (72) nach Anspruch 8, wobei die Fluidflussrate ungefähr 410 bis 1230 L/m$^2$ min (10 bis 30 gal/ft$^2$ min) beträgt.

**10.** Vorrichtung (72) nach Anspruch 8, wobei die Fluidflussrate ungefähr 820 bis 1230 L/m$^2$ min (20 bis 30 gal/ft$^2$ min) beträgt.

**11.** Vorrichtung (72) nach den Ansprüchen 1, 2 und 4, wobei die Porosität des Filterbetts (76) von einer Porosität von ungefähr 92 bis 94% vor der Komprimierung bis zu einer Porosität von ungefähr 87 bis 90%, wenn es komprimiert ist, eingestellt werden kann.

**12.** Vorrichtung (72) nach Anspruch 1, wobei die Vorrichtung (72) zur Filtration bei einer Fluidflussrate von ungefähr 820 bis 1230 L/m$^2$ min (20 bis 30 gal/ft$^2$ min) bei einem Bettkomprimierungsverhältnis von ungefähr 15 bis 40 Prozent und bei einer Rückspülungsrate von ungefähr 1 bis 6 Prozent, bezogen auf das gesamte Fluid, das durch den Filter tritt, betreibbar ist.

**13.** Filtrationsvorrichtung (72) für die Abwasserbehandlung nach den Ansprüchen 1, 2 und 4, wobei

das Filtrationsmittel (30) zwischen der ersten und zweiten Lochplatte (80, 78) angeordnet ist und das Filterbett (76) definiert,
wobei das Filterbett (76) zum Reinigen expandiert wird; und
wobei Mittel vorgesehen sind, um ein Gas in das Abwasser einzubringen, wenn das Filterbett (76) zum Reinigen expandiert ist.

**14.** Vorrichtung (72) nach Anspruch 13, wobei der Einlass (64) einen Raum (79) umfasst, um das Abwasser gleichmäßig verteilt durch die erste Lochplatte (80) zu leiten.

**15.** Vorrichtung (72) nach Anspruch 14, wobei die Vorrichtung (72) zur Filtration betreibbar ist, um die Trübheit von einfließendem Abwasser von ungefähr 8 NTU auf ungefähr 2 NTU bei einer Abwasserflussrate von ungefähr 820 bis 1230 L/m$^2$ min (20 bis 30 gal/ft$^2$ min), bei einem Bettkomprimierungsverhältnis von ungefähr 15 bis 40 Prozent und bei einer Rückspülungsrate von ungefähr 1 bis 6 Prozent, bezogen auf das gesamte Abwasser, das durch den Filter tritt, zu reduzieren.

**16.** Vorrichtung (72) nach Anspruch 15, wobei die Rückspülungsflussrate ungefähr 1 bis 3 Prozent, bezogen auf das gesamte Abwasser, das durch den Filter tritt, beträgt.

**17.** Verfahren zum Filtern eines Fluids, umfassend die Schritte:

a) Komprimieren eines komprimierbaren faserigen klumpenförmigen Filtrationsmittels, das in einem Filterbett angeordnet ist, um einen Porositätsgradienten in dem Filterbett zu definieren, der von mehr porös zu weniger porös in einer Richtung entgegen dem Fluss des Fluids verläuft, so dass die Filtration in einer Richtung von einem poröseren zu einem weniger porösen Filterbett verläuft; und
b) Leiten von Fluid durch das Filterbett;
c) periodisches Expandieren des Filterbetts, während weiterhin Fluid durch das Filterbett geleitet wird, um das Filtrationsmittel zu reinigen.

**18.** Verfahren nach Anspruch 17, wobei das Fluid eine Flüssigkeit ist und Gas zur zusätzlichen Reinigung des Mittels in die Flüssigkeit eingebracht wird, bevor die Flüssigkeit in das Filterbett eintritt.

**19.** Verfahren nach Anspruch 17, das ferner den Schritt des Entfernens zunehmend kleinerer Partikel aus dem Fluid umfasst, während die Filtration von einem durchlässigeren zu einem weniger durchlässigen Mittel verläuft.

**20.** Verfahren nach Anspruch 17, das ferner den Schritt des Veränderns der Komprimierung des Mittels während der Filtration als Reaktion auf die Beschaffenheiten des eintretenden Fluids umfasst.

**21.** Verfahren nach Anspruch 17, das ferner die Schritte des Überwachens des Druckverlusts entlang dem Filterbett und des Veränderns der Komprimierung des Mittels während der Filtration umfasst, um den Druckverlust zu vermindern und um die Zeit zwischen den periodischen Reinigungen zu verlängern.

**22.** Verfahren zum Filtern einer Flüssigkeit gemäß Anspruch 17, um Partikel daraus zu entfernen, ferner umfassend die Schritte:

b1) Entfernen zunehmend kleinerer Partikel aus der Flüssigkeit, während die Filtration von einem poröseren zu einem weniger porösen Mittel verläuft;
b2) Überwachen des Druckverlusts entlang dem Filterbett;
c) periodisches Expandieren des Filterbetts, wenn ein maximaler Druckverlust erreicht ist, während weiterhin Flüssigkeit durch das Filterbett geleitet wird, um das Filtrationsmittel zu reinigen.

**23.** Verfahren nach Anspruch 22, wobei Flüssigkeit durch das expandierte Filterbett bei einer Rate geleitet wird, die ungefähr 1 bis 6% des Gesamtflüssigkeitsflusses durch das Filterbett beträgt.

**24.** Verfahren nach Anspruch 17, wobei das Filterbett auf ein Komprimierungsverhältnis von ungefähr 15 bis 40% komprimiert wird, wobei Flüssigkeit durch das komprimierte Filterbett bei einer Flussrate von ungefähr 205 bis 1230 L/m$^2$ min (5 bis 30 gal/ft$^2$ min) geleitet wird und wobei Rückspülungsflüssigkeit durch den Filter bei einer Rückspülungsrate von ungefähr 1 bis 6%, bezogen auf die gesamte Flüssigkeit, die durch den Filter tritt, geleitet wird.

**25.** Verfahren nach Anspruch 22, wobei das Filterbett von einer Porosität von ungefähr 92 bis 94% bis zu einer minimalen Porosität von ungefähr 87 bis 90% komprimiert wird.

**26.** Verfahren nach Anspruch 22, wobei die maximale Beseitigungseffizienz bei einer Bettkomprimierung von 40% bei einer Flüssigkeitsflussrate von 820 L/m$^2$ min (20 gal/ft$^2$ min) und einer Bettkomprimierung von 30% bei einer Flussrate von 1230 L/m$^2$ min erreicht wird.

**27.** Verfahren zur tertiären Abwasserbehandlung, umfassend die Schritte:

a) Behandeln des Abwassers in einem Belebtschlammreaktor, um ein primär gereinigtes Abwasser zu liefern,
b) Behandeln des primär gereinigten Abwassers in einem Klärapparat, um ein sekundär gereinigtes Abwasser zu liefern;
c) Filtern des sekundär gereinigten Abwassers gemäß dem Verfahren nach Anspruch 17, um ein tertiär gereinigtes Abwasser zu liefern.

**28.** Verfahren nach Anspruch 27, wobei die Filtrationsvorrichtung zur Filtration betreibbar ist, um die Trübheit von einfließendem Abwasser von ungefähr 8 NTU auf ungefähr 2 NTU bei einer Abwasserflussrate von ungefähr 820 bis 1230 L/m$^2$ min (20 bis 30 gal/ft$^2$ min), bei einem Bettkomprimierungsverhältnis von ungefähr 15 bis 40 Prozent und bei einer Rückspülungsrate von ungefähr 1 bis 6 Prozent, bezogen auf das gesamte Abwasser, das durch den Filter tritt, zu reduzieren.

**29.** Verfahren nach Anspruch 28, wobei die Rückspülungsflussrate ungefähr 1 bis 3 Prozent, bezogen auf das gesamte Abwasser, das durch den Filter tritt, beträgt.

**30.** Verfahren nach Anspruch 27, wobei die Wassererzeugungsrate eines Filters von zumindest 76 cm (30 Inch) unkomprimierter Tiefe und bei einer Abwasserqualität von 2 NTU oder weniger, bezogen auf eine einfließende Qualität von bis zu 8 NTU, über 1.000.000 L/m$^2$ Tag (28.000 gal/ft$^2$ Tag) beträgt.

**Revendications**

**1.** Appareil de filtration (72) comprenant :

- un carter de filtre (74) ayant une entrée de fluide (64) et une sortie de fluide (67) ;
- un milieu de filtration (30) en masse fibreuse compressible de porosité ajustable qui est défini par le rapport (%) des espaces vides, ou interstices, du milieu de filtre au volume total du milieu de filtre et une dimension de collecteur qui est définie comme l'écartement moyen entre les pores dans le milieu de filtre disposé dans un lit de filtre (76) à l'intérieur dudit carter de filtre (74) entre ladite entrée de fluide (64) et ladite sortie de fluide (67) ;
- des moyens pour ajuster la porosité et la dimension de collecteur du milieu de filtration (30), lesdits moyens comprenant des moyens de compression qui sont agencés de telle manière qu'ils compriment ledit milieu de filtration (30) selon un gradient de compression procédant de plus comprimé à moins comprimé dans une direction opposée à l'écoulement du fluide de telle sorte que la filtration procède dans une direction depuis un filtre plus poreux vers un filtre moins poreux.

2. Appareil (72) de la revendication 1,
dans lequel lesdits moyens pour comprimer ledit milieu de filtration (30) comprennent :

- un premier panneau perforé (80) monté immobile à l'intérieur dudit appareil (72) ;
- un second panneau perforé (78) monté mobile à l'intérieur dudit appareil (72) et écarté au-dessus dudit premier panneau perforé (80), ledit milieu de filtration étant positionné entre lesdits deux panneaux ; et
- des moyens pour déplacer sélectivement ledit second panneau perforé (78) monté mobile pour se rapprocher et s'écarter dudit premier panneau perforé (80), lesdits moyens étant disposés au-dessus dudit second panneau perforé (78).

3. Appareil (72) de la revendication 1,
comprenant en outre des moyens pour agiter ledit milieu de filtre (30) dans une condition non comprimée afin de nettoyer ledit milieu de filtre (30).

4. Appareil (72) de la revendication 1,
dans lequel ladite entrée de fluide (64) est disposée au-dessous de ladite sortie de fluide (67) et ledit filtre est exploité dans un mode à courant ascendant.

5. Appareil (72) de la revendication 1,
dans lequel lesdits moyens pour ajuster la porosité et la dimension de collecteur du milieu de filtration (30) sont ajustables pendant la filtration.

6. Appareil (72) de la revendication 1,
dans lequel ledit lit de filtre (76) a une porosité depuis environ 92 jusqu'à 94 % avant compression et une porosité depuis environ 87 jusqu'à 90 % lorsqu'il est comprimé.

7. Appareil (72) de la revendication 1,
dans lequel ledit lit de filtre (76) a, avant compression, une profondeur d'au moins environ 30 pouces (760 mm).

8. Appareil (72) de la revendication 1,
dans lequel ledit appareil (72) est exploitable pour une filtration à un débit d'écoulement de fluide depuis environ 205 jusqu'à 1230 l/m$^2$ min (5 à 30 gal/ft$^2$ min), à un rapport de compression de lit depuis environ 0 jusqu'à 40 pour cent et à un taux de lavage par inversion de courant depuis environ 1 jusqu'à 6 pour cent sur la base du total du fluide traversant le filtre.

9. Appareil (72) de la revendication 8,
dans lequel ledit débit d'écoulement de fluide est depuis environ 410 jusqu'à 1230 l/m$^2$ min (10 à 30 gal/ft$^2$ min).

10. Appareil (72) de la revendication 8,
dans lequel ledit débit d'écoulement de fluide est depuis environ 820 jusqu'à 1230 l/m$^2$ min (20 à 30 gal/ft$^2$ min).

11. Appareil (72) selon les revendications 1, 2 et 4,
dans lequel la porosité dudit lit de filtre (76) peut être ajustée d'une porosité depuis environ 92 jusqu'à 94 % avant compression à une porosité depuis environ 87 jusqu'à 90 % lorsqu'il est comprimé.

12. Appareil (72) de la revendication 1,

dans lequel ledit appareil est exploitable pour une filtration à un débit d'écoulement de fluide depuis environ 820 jusqu'à 1230 l/m$^2$ min (20 à 30 gal/ft$^2$ min) à un rapport de compression de lit depuis environ 15 jusqu'à 40 pour cent et à un taux de lavage par inversion de courant depuis environ 1 jusqu'à 6 pour cent sur la base du total du fluide traversant le filtre.

13. Appareil de filtration (72) pour un traitement d'eaux usées selon les revendications 1, 2 et 4, dans lequel

   - ledit milieu de filtration (30) est disposé entre les premier et second panneaux perforés (80, 78) et définissant ledit lit de filtre (76) ;
   - dans lequel ledit lit de filtre est dilaté pour le nettoyage ; et
   - dans lequel des moyens sont prévus pour introduire un gaz dans lesdites eaux usées lorsque ledit lit de filtre (76) est dilaté pour le nettoyage.

14. Appareil (72) de la revendication 13, dans lequel ladite entrée (64) comprend en outre une chambre d'insufflation (79) pour distribuer les eaux usées uniformément à travers ledit premier panneau perforé (80).

15. Appareil (72) de la revendication 14, dans lequel ledit appareil (72) est exploitable pour une filtration afin de réduire la turbidité d'eaux usées affluantes depuis environ 8 NTU jusqu'à environ 2 NTU à un débit d'écoulement d'eaux usées depuis environ 820 jusqu'à 1230 l/m$^2$ min (20 à 30 gal/ft$^2$ min) à un rapport de compression de lit depuis environ 15 jusqu'à 40 pour cent et à un taux de lavage par inversion de courant depuis environ 1 jusqu'à 6 pour cent sur la base du total des eaux usées traversant le filtre.

16. Appareil (72) de la revendication 15, dans lequel le taux de lavage par inversion de courant est depuis environ 1 jusqu'à 3 pour cent sur la base du total des eaux usées traversant le filtre.

17. Un procédé pour filtrer un fluide comprenant les étapes de :

   a) compression d'un milieu de filtration en masse fibreuse compressible disposé dans un lit de filtre pour définir un gradient de porosité dans le lit de filtre procédant de plus poreux à moins poreux dans une direction opposée à l'écoulement de fluide de telle sorte que la filtration procède d'un lit de fluide plus poreux à un lit de fluide moins poreux ;
   b) passage du fluide à travers ledit lit de fluide ;
   c) dilatation périodique du lit de filtre tout en continuant à faire passer du fluide à travers le lit de filtre pour nettoyer le milieu de filtration.

18. Le procédé de la revendication 17, dans lequel le fluide est un liquide et un gaz est injecté dans le liquide avant l'entrée dans le lit de filtre pour un nettoyage additionnel du milieu.

19. Le procédé de la revendication 17, comprenant en outre l'étape d'enlèvement progressif de particules plus petites pendant que la filtration procède d'un milieu plus poreux à un milieu moins poreux.

20. Le procédé de la revendication 17, comprenant en outre l'étape d'altération de la compression du milieu pendant la filtration en réponse à des conditions de fluide entrant.

21. Le procédé de la revendication 17, comprenant en outre les étapes de contrôle de la perte de charge à travers le lit de filtre et d'altération de la compression du milieu pendant la filtration pour réduire la perte de charge et pour augmenter le temps entre des nettoyages périodiques.

22. Un procédé pour filtrer un liquide pour en enlever des particules selon la revendication 7, comprenant en outre les étapes de :

b1) enlèvement progressif de particules plus petites du liquide pendant que la filtration procède d'un milieu plus poreux à un milieu moins poreux ;

b2) contrôle de la perte de charge à travers le lit de filtre ;

c) dilatation périodique du lit de filtre lorsqu'une perte de charge maximale a été atteinte tout en continuant à faire passer du liquide à travers le lit de filtre pour nettoyer le milieu de filtration.

23. Le procédé de la revendication 22,
dans lequel on fait passer du liquide à travers le lit de filtration dilaté à un taux qui est depuis environ 1 jusqu'à 6 % de l'écoulement de liquide total à travers le lit de filtre.

24. Le procédé de la revendication 17,
dans lequel le lit de filtre est comprimé à un rapport de compression depuis environ 15 jusqu'à 40 pour cent, on fait passer du liquide à travers le lit de filtre comprimé à un débit d'écoulement depuis environ 205 jusqu'à 1230 l/m$^2$ min (5 à 30 gal/ft$^2$ min) et on fait passer à travers le filtre du liquide de lavage par inversion de courant à un taux de lavage par inversion de courant depuis environ 1 jusqu'à 6 pour cent sur la base du total du fluide traversant le filtre.

25. Le procédé de la revendication 22,
dans lequel le lit de filtre est comprimé depuis une porosité depuis environ 92 jusqu'à 94 % à une porosité minimale depuis environ 87 jusqu'à 90 %.

26. Le procédé de la revendication 22,
dans lequel l'efficacité d'enlèvement maximale est atteinte à une compression de lit de 40% à un débit d'écoulement de liquide de 820 l/m$^2$ min (20 gal/ft$^2$ min) et à une compression de lit de 30 % à un débit d'écoulement de 1230 l/m$^2$ min.

27. Un procédé de traitement tertiaire d'eaux usées comprenant les étapes de :

a) traitement des eaux usées dans un réacteur à boues activées pour fournir un effluent primaire ;

b) traitement de l'effluent primaire dans un vase à clarifier pour fournir un effluent secondaire ;

c) filtration de l'effluent secondaire selon le procédé de la revendication 17 pour fournir un effluent tertiaire.

28. Le procédé de la revendication 27,
dans lequel l'appareil de filtration est exploitable pour une filtration afin de réduire la turbidité d'eaux usées affluantes depuis environ 8 NTU jusqu'à environ 2 NTU à un débit d'écoulement d'eaux usées depuis environ 820 jusqu'à 1230 l/m$^2$ min (20 à 30 gal/ft$^2$ min), à un taux de compression de lit depuis environ 15 jusqu'à 40 pour cent et à un taux de lavage par inversion de courant depuis environ 1 jusqu'à 6 pour cent sur la base du total des eaux usées traversant le filtre.

29. Le procédé de la revendication 28,
dans lequel le taux de lavage par inversion de courant est depuis environ 1 jusqu'à 3 pour cent sur la base du total des eaux usées traversant le filtre.

30. Le procédé de la revendication 17,
dans lequel la capacité de production d'eau d'un filtre d'au moins 76 cm (30 pouces) de profondeur non comprimée et à une qualité d'effluent de 2 NTU ou moins sur la base d'une qualité d'affluent jusqu'à 8 NTU est supérieure à 1.000.000 l/m$^2$ jour (28.000 gal/ft$^2$ jour)

fig. 1.

FIG. 2.

88
68
74
78
84
76
INFLUENT
*Fig. 3A.*
79
80
92
90
67
EFFLUENT

88
WASH WATER AFTER WASHING
78
68
74
76
*Fig. 3B.*
INFLUENT
(WASHING WATER)
84
WASHING AIR
79
80
92
90
67

*88*

FLUSH WATER

*68*

*67*

*74*

*78*

*76*

*FIE. 3C.*

INFLUENT

*84*

*79*

*92*

*90*

*80*

*34*

*30*

*32*

*34*

*Fig. 4.*

FIG. 5A

FIG. 5B

FIG. 5C

FIG. 5D

FIG. 6

FIG. 7

FIG. 8A

FIG. 8B

FIG. 8C

FIG. 9A

FIG. 9B

FIG. 9C

FIG. 10A

FIG. 10B

FIG. 10C

FIG. 11A

FIG. 11B

FIG. 11C

FIG. 12A

FIG. 12B

FIG. 12C

**FIG. 13A**

**FIG. 13B**

**FIG. 13C**

FIG. 14A

FIG. 14B

FIG. 14C

FIG. 15A

FIG. 15B

FIG. 15C

FIG. 16A

FIG. 16B

FIG. 16C

FIG. 17A

FIG. 17B

FIG. 17C

FIG. 18A

FIG. 18B

FIG. 18C

FIG. 19A

FIG. 19B

FIG. 19C

FIG. 20A

FIG. 20B

FIG. 20C

Run time, min

**FIG. 21A**

**FIG. 21B**

**FIG.21C**

FIG. 22A

FIG. 22B

FIG. 22C

FIG. 23A

FIG. 23B

FIG. 23C

EP 0 949 947 B1

Fig. 24.
PRIOR ART

42